(19) **Europäisches Patentamt / European Patent Office / Office européen des brevets**

(11) **EP 4 564 381 A1**

(12) **EUROPEAN PATENT APPLICATION**
published in accordance with Art. 153(4) EPC

(43) Date of publication:
04.06.2025 Bulletin 2025/23

(51) International Patent Classification (IPC):
$H01F\ 5/00^{(2006.01)}$      $H01F\ 38/14^{(2006.01)}$

(21) Application number: 22953209.8

(52) Cooperative Patent Classification (CPC):
H01F 5/00; H01F 38/14

(22) Date of filing: 02.12.2022

(86) International application number:
PCT/JP2022/044550

(87) International publication number:
WO 2024/024121 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 JP 2022120310

(71) Applicant: Tatsuta Electric Wire & Cable Co., Ltd.
Higashiosaka-shi, Osaka 578-8585 (JP)

(72) Inventor: SUZUKI, Yoshimitsu
Higashiosaka-shi, Osaka 578-8585 (JP)

(74) Representative: Maiwald GmbH
Engineering
Elisenhof
Elisenstrasse 3
80335 München (DE)

(54) **COIL**

(57) A coil (100A) includes an electric wire (1) wound around a central axis (2) once or helically a plurality of times. The electric wire (1) includes a conductor (10) having an elongated cross-sectional shape (11) in a plane including the central axis (2). The cross-sectional shape (11) is bent such that a first end (12) and a second end (13) in a longitudinal direction are away from the central axis (2). Loss in the coil including the electric wire wound once or helically a plurality of times is thus reduced.

FIG.2

**Description**

TECHNICAL FIELD

The present disclosure relates to a coil.

BACKGROUND ART

A coil obtained by winding an electric wire including a conductor having a circular cross-sectional shape has conventionally generally been used. Such a coil, however, has been known to suffer from uneven distribution of a flow of a current due to a skin effect and a proximity effect of the electric wire. Therefore, when an alternating current (AC current) is fed to the coil, loss originating from these effects is disadvantageously caused, which lowers efficiency in transmission of electric power.

Therefore, reduction in loss in the coil has been studied. For example, Japanese Patent Laying-Open No. 2021-100102 (PTL 1) discloses a coil obtained by spirally winding a plurality of times, an electric wire including a conductor having a non-circular cross-sectional shape.

CITATION LIST

PATENT LITERATURE

PTL 1: Japanese Patent Laying-Open No. 2021-100102

SUMMARY OF INVENTION

TECHNICAL PROBLEM

A method of winding an electric wire in a coil is different depending on an application of the coil. A technique disclosed in PTL 1 is directed to a coil obtained by spirally winding an electric wire a plurality of times, and not directed to a coil obtained by winding an electric wire once or helically winding the electric wire a plurality of times. In other words, PTL 1 fails to disclose reduction in loss in the coil in which the electric wire is wound once or helically a plurality of times.

The present disclosure was made with attention being paid to the problem above, and an object thereof is to reduce loss in a coil including an electric wire wound once or helically wound a plurality of times.

SOLUTION TO PROBLEM

A coil according to one aspect of the present disclosure includes an electric wire wound around a central axis once or helically a plurality of times. The electric wire includes a conductor having an elongated cross-sectional shape in a plane including the central axis. The cross-sectional shape is bent such that a first end and a second end in a longitudinal direction are away from the central axis.

According to the coil, generation of a backflow current and uneven distribution of the current in the conductor are suppressed. Consequently, loss in the coil including the electric wire wound once or helically a plurality of times can be reduced.

ADVANTAGEOUS EFFECTS OF INVENTION

According to the present disclosure, loss in the coil including the electric wire wound once or helically a plurality of times can be reduced.

BRIEF DESCRIPTION OF DRAWINGS

Fig. 1 is a perspective view of an appearance of a coil according to a first embodiment.
Fig. 2 is a cross-sectional view showing a coil in a first example.
Fig. 3 is a cross-sectional view showing a coil in a second example.
Fig. 4 is a cross-sectional view showing a coil in a third example.
Fig. 5 is a cross-sectional view showing an exemplary electric wire including an insulating material.

Fig. 6 is a cross-sectional view showing another exemplary electric wire including an insulating material.

Fig. 7 is a cross-sectional view showing a coil in a first reference example.

Fig. 8 is a cross-sectional view showing a coil in a second reference example.

Fig. 9 is a cross-sectional view showing a coil in a third reference example.

Fig. 10 is a cross-sectional view showing a coil in a fourth reference example.

Fig. 11 is a cross-sectional view showing a coil in a fifth reference example.

Fig. 12 is a diagram showing a distribution of a current in a cross-section of a conductor in models Nos. 1A to 38A, 27A1, and 27A2 when a frequency is set to 100 kHz.

Fig. 13 shows a graph of a quality factor of each model in the first embodiment when a coil diameter d is set to 50 mm and a frequency is set to 100 kHz.

Fig. 14 shows a graph of a quality factor of each model in the first embodiment when coil diameter d is set to 100 mm and the frequency is set to 100 kHz.

Fig. 15 is a perspective view of an appearance of a coil according to a second embodiment.

Fig. 16 is a cross-sectional view showing a coil in a fourth example.

Fig. 17 is a cross-sectional view showing a coil in a fifth example.

Fig. 18 is a cross-sectional view showing a coil in a sixth example.

Fig. 19 is a cross-sectional view showing a coil in a seventh example.

Fig. 20 is a cross-sectional view showing a coil in a sixth reference example.

Fig. 21 is a cross-sectional view showing a coil in a seventh reference example.

Fig. 22 is a cross-sectional view showing a coil in an eighth reference example.

Fig. 23 is a cross-sectional view showing a coil in a ninth reference example.

Fig. 24 is a cross-sectional view showing a coil in a tenth reference example.

Fig. 25 is a cross-sectional view showing a coil in an eleventh reference example.

Fig. 26 is a diagram showing a distribution of a current in a cross-section of a conductor in models Nos. 1B to 15B when a frequency is set to 100 kHz.

Fig. 27 is a diagram showing a distribution of a current in a cross-section of a conductor in models Nos. 16B to 30B when the frequency is set to 100 kHz.

Fig. 28 is a diagram showing a distribution of a current in a cross-section of a conductor in models Nos. 31B to 38B, 27B1, and 27B2 when the frequency is set to 100 kHz.

Fig. 29 is a diagram showing a distribution of a current in a cross-section of a conductor in models Nos. 2B1 to 2B3, 18B1 to 18B3, and 21B1 to 21B3 when the frequency is set to 100 kHz.

Fig. 30 is a diagram showing a distribution of a current in a cross-section of a conductor in models Nos. 24B1 to 24B3, 27B3 to 27B5, and 30B1 to 30B3 when the frequency is set to 100 kHz.

Fig. 31 shows a graph of a quality factor of each model in the second embodiment when coil diameter d is set to 50 mm and the frequency is set to 100 kHz.

Fig. 32 shows a graph of a quality factor of each model in the second embodiment when coil diameter d is set to 100 mm and the frequency is set to 100 kHz.

Fig. 33 is a perspective view of an appearance of a coil according to a third embodiment.

Fig. 34 is a cross-sectional view showing a coil in an eighth example.

Fig. 35 shows a graph of a quality factor of each model in the third embodiment when coil diameter d is set to 50 mm and the frequency is set to 100 kHz.

Fig. 36 shows a graph of a quality factor of each model in the third embodiment when coil diameter d is set to 100 mm and the frequency is set to 100 kHz.

DESCRIPTION OF EMBODIMENTS

An embodiment of the present invention will be described in detail with reference to the drawings. The same or corresponding elements in the drawings have the same reference characters allotted and description thereof will not be repeated. An embodiment or a modification which will be described below may selectively be combined as appropriate.

<First Embodiment>

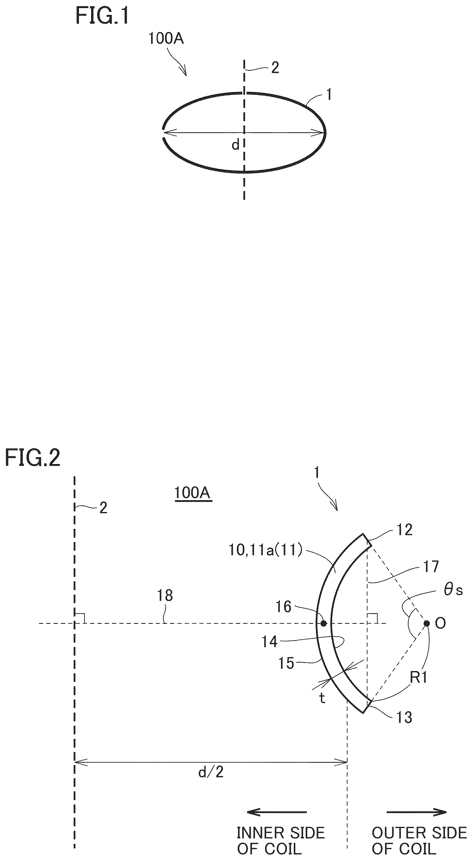

Fig. 1 is a perspective view of an appearance of a coil according to a first embodiment. As shown in Fig. 1, a coil 100A according to the first embodiment includes an electric wire 1 wound once around a central axis 2. A diameter of coil 100A (which will be referred to as a "coil diameter" below) is denoted as d.

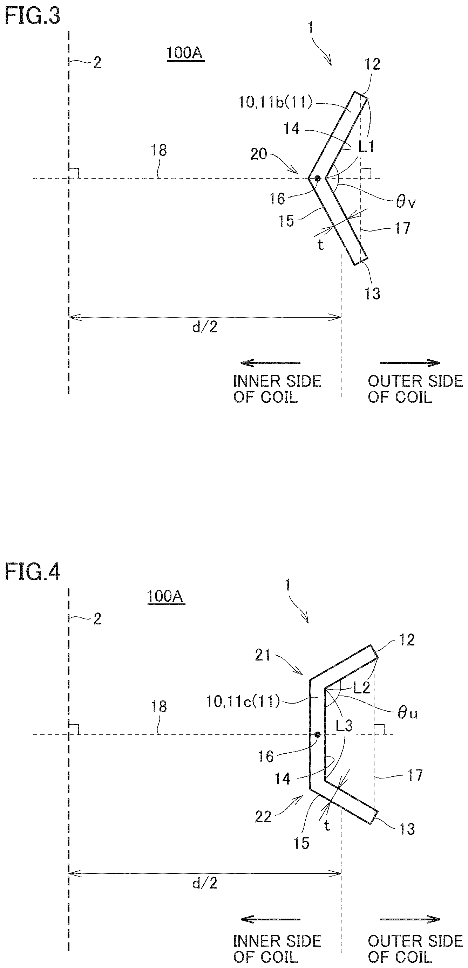

Fig. 2 is a cross-sectional view showing a coil in a first example. Fig. 3 is a cross-sectional view showing a coil in a second example. Fig. 4 is a cross-sectional view showing a coil in a third example. Figs. 2 to 4 each show the cross-sectional view of coil 100A in a plane including central axis 2. As shown in Figs. 2 to 4, electric wire 1 is wound around central axis 2 once such that a distance from central axis 2 is set to d/2. Figs. 2 to 4 show only a part of coil 100A. In other words, Figs. 2 to 4 do not show the cross-section of coil 100A present on the left side of central axis 2.

As shown in Figs. 2 to 4, electric wire 1 includes a conductor 10 having a non-circular cross-sectional shape 11 in the plane including central axis 2. Conductor 10 has such a cross-sectional shape 11 as avoiding or bypassing a location where a backflow current is more likely to flow and a location where a current is less likely to flow. Consequently, loss in conductor 10 is reduced. Specifically, cross-sectional shape 11 is elongated and bent in such a manner that a first end 12 which is one end in a longitudinal direction and a second end 13 which is the other end in the longitudinal direction are away from central axis 2. Generation of the backflow current and uneven distribution of the current in conductor 10 at the time when an AC current is fed to coil 100A are thus suppressed.

In an example where first end 12 and second end 13 are tapered, uneven distribution of the current is likely in this portion. Therefore, first end 12 and second end 13 are preferably formed as being tapered in such a manner that first end 12 and second 13 as a whole are rounded.

With a straight line that passes through a central point 16 of cross-sectional shape 11 and is orthogonal to a line segment 17 that connects first end 12 and second end 13 to each other being defined as a reference straight line 18, cross-sectional shape 11 is preferably in line symmetry with respect to reference straight line 18. Generation of the backflow current and uneven distribution of the current in conductor 10 at the time when an AC current is fed to coil 100A are thus further suppressed.

Reference straight line 18 defines a posture of conductor 10. As shown in Figs. 2 to 4, in any portion of electric wire 1, reference straight line 18 is preferably orthogonal to central axis 2. Generation of the backflow current and uneven distribution of the current in conductor 10 are thus further suppressed.

As described above, cross-sectional shape 11 is bent such that first end 12 and second end 13 are away from central axis 2. Therefore, cross-sectional shape 11 is provided with a concave first edge 14 that faces the outside of coil 100A and a convex second edge 15 opposed to central axis 2.

Cross-sectional shape 11 is preferably formed such that an interval t between first edge 14 and second edge 15 is constant. Interval t is preferably at most two times as large as a skin depth (a depth at which the current is 1/e of a surface current) at a useful frequency of coil 100A.

As shown in Fig. 2, a cross-sectional shape 11a of conductor 10 in coil 100A in the first example is in an arc shape having a central angle $\theta$s. Specifically, first edge 14 and second edge 15 are each in the arc shape having central angle $\theta$s. Generation of the backflow current and uneven distribution of the current in conductor 10 are thus further suppressed. Cross-sectional shape 11a is in line symmetry with respect to reference straight line 18.

In an example where conductor 10 has cross-sectional shape 11a in the arc shape, based on a result of simulation which will be described later, central angle $\theta$s is preferably from 15° to 345°, more preferably from 60° to 345°, further preferably from 105° to 345°, still further preferably from 120° to 345°, particularly preferably from 180° to 345°, and most preferably from 240° to 345°. As central angle $\theta$s has the values above, generation of the backflow current and uneven distribution of the current in conductor 10 are more effectively suppressed. Central angle $\theta$s is calculated, for example, as an arithmetic mean value of measurement values of the angle in cross-sectional shape 11a at any ten locations in electric wire 1.

In an example where conductor 10 has cross-sectional shape 11a in the arc shape and interval t is constant, a radius R1 is calculated from interval t, central angle $\theta$s, and a conductor cross-sectional area (an area of cross-sectional shape 11a) that is required, with R1 representing a radius of first edge 14 from a central point O of the arc.

For example, when the frequency is set to 100 kHz and the conductor cross-sectional area comparable to 2 mm$^2$ is required, radius R1 is expressed with interval t (mm) and central angle $\theta$s (°), as

$$R1 = (2 \times 360/\theta s - \pi t^2)/2t\pi$$

where interval t and radius R1 are each calculated, for example, as an arithmetic mean value of measurement values in the cross-sectional shape at any ten locations in electric wire 1.

As shown in Fig. 3, a cross-sectional shape 11b of conductor 10 in coil 100A in the second example is in a V shape (a shape obtained by turning V by 90°). Specifically, cross-sectional shape 11b is provided with a bent portion 20 at a location of a central point 16. Each of an area from bent portion 20 to first end 12 and an area from bent portion 20 to second end 13 linearly extends in a direction inclined with respect to central axis 2. Cross-sectional shape 11b is in line symmetry with respect to reference straight line 18.

In an example where bent portion 20 is pointed, uneven distribution of the current is likely in this portion. Therefore, an outer side of bent portion 20 (a side opposed to central axis 2 in Fig. 3) is preferably in a beveled shape.

When conductor 10 has cross-sectional shape 11b in the V shape, based on a result of simulation which will be described later, an angle $\theta$v formed on an inner side of bent portion 20 is preferably from 90° to 165°, more preferably from 105° to 165°, further preferably from 120° to 165°, and particularly preferably from 120° to 150°. Angle $\theta$v is calculated, for

example, as an arithmetic mean value of measurement values of the angle in the cross-sectional shape at any ten locations in electric wire 1.

In an example where conductor 10 has cross-sectional shape 11b in the V shape and interval t is constant, a length L1 is calculated from interval t, angle $\theta v$, and a conductor cross-sectional area (an area of cross-sectional shape 11b) that is required, with L1 representing a length half the length of first edge 14.

As shown in Fig. 4, a cross-sectional shape 11c of conductor 10 in coil 100A in the third example is in a U shape (a state obtained by turning U by 90°). Specifically, cross-sectional shape 11c is provided with two bent portions 21 and 22. A portion between bent portions 21 and 22 in cross-sectional shape 11 linearly extends in parallel to central axis 2. Each of an area from bent portion 21 to first end 12 and an area from bent portion 22 to second end 13 linearly extends in a direction inclined with respect to central axis 2. Cross-sectional shape 11c is in line symmetry with respect to reference straight line 18. Therefore, angles $\theta_U$ formed on inner sides of bent portions 21 and 22 are identical to each other.

When bent portions 21 and 22 are pointed, uneven distribution of the current is likely in these portions. Therefore, outer sides of bent portions 21 and 22 (sides opposed to central axis 2 in Fig. 4) are preferably beveled.

When conductor 10 has cross-sectional shape 11c in the U shape, based on a result of simulation which will be described later, angle $\theta u$ formed on the inner side of bent portion 21 or 22 is preferably from 105 to 165° and more preferably from 105 to 150°. Angle $\theta u$ is calculated, for example, as an arithmetic mean value of measurement values of the angle in the cross-sectional shape at any ten locations in electric wire 1.

In an example where conductor 10 has cross-sectional shape 11c in the U shape and interval t is constant, a length L2 and a length L3 are calculated from interval t, angle $\theta u$, and a conductor cross-sectional area (an area of cross-sectional shape 11) that is required, with L2 representing a length from bent portion 21 to first end 12 (or a length from bent portion 22 to second end 13) in first edge 14 and L3 representing a length between bent portions 21 and 22 in first edge 14.

Conductor 10 is composed, for example, of a flat braided copper wire, a copper plate, a copper tape, a copper foil, or the like. A material for conductor 10 is not limited to copper, but metal other than copper may be applicable.

Electric wire 1 may include an insulating material that covers conductor 10. Alternatively, conductor 10 does not have to be covered with the insulating material but may be a bare conductor.

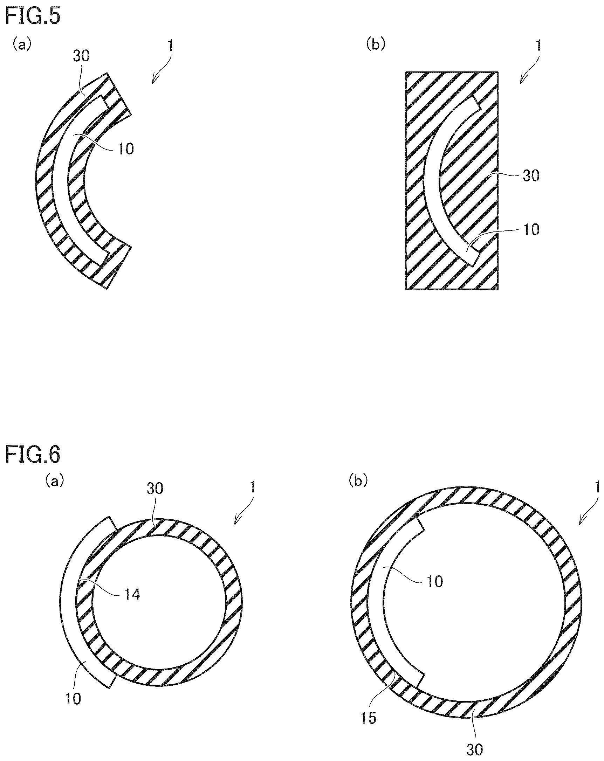

Fig. 5 is a cross-sectional view showing an exemplary electric wire including an insulating material. Fig. 5 shows electric wire 1 where the entire conductor 10 is covered with an insulating material 30. For example, as shown in Fig. 5(a), electric wire 1 may include insulating material 30 that covers the entire conductor 10 and is provided with a periphery in conformity with a periphery of conductor 10. Alternatively, as shown in Fig. 5(b), electric wire 1 may include insulating material 30 that covers the entire conductor 10 and has a rectangular periphery.

Fig. 6 is a cross-sectional view showing another exemplary electric wire including an insulating material. Fig. 6 shows electric wire 1 where only a part of conductor 10 is covered with insulating material 30. For example, as shown in Fig. 6(a), electric wire 1 may include a hollow cylindrical insulating material 30 provided with an outer periphery in contact with first edge 14 of conductor 10. Alternatively, as shown in Fig. 6(b), electric wire 1 may include a hollow cylindrical insulating material 30 provided with an inner periphery in contact with second edge 15 of conductor 10.

Though a material for insulating material 30 is not limited to a material below, it is preferably an electrically insulating polymer composition and further preferably a polymer composition having a volume resistivity not lower than $1\times10^{12}$ $\Omega\cdot$cm.

(Simulation)

A model of each of a plurality of coils different in cross-sectional shape and posture of the conductor was evaluated under analysis conditions shown in Table 1, with the use of analysis software Femtet® (Version 2018.1.2.70140).

[Table 1]

| Item | | Contents |
|---|---|---|
| Solver | | Magnetic field analysis |
| Type of Analysis | | Harmonic analysis |
| Frequency | | 1 Hz to 100 MHz Division into eight at log interval |
| Mesh Size | Standard | 0.03 mm |
| | Air Area | Automatically made |
| Frequency-Dependent Mesh | | Reference frequency 1 kHz |
| | | Create skin mesh |

(continued)

| Item | | Contents |
|---|---|---|
| Body | Type of Body | Sheet body |
| | Material Name | Copper |
| | Conductivity | $5.977 \times 10^7$ S/m |
| | Specific Permeability | 1 |
| | Current | AC 1 A, rearward |
| | | Phase of 0 deg |
| | | The number of turns being 1 |
| | Direction Vector | (X, Y, X) = (0, 0, 1) |

Models to be evaluated include models corresponding to coils in first to fifth reference examples shown below, in addition to models corresponding to coils 100A in the first to third examples shown in Figs. 2 to 4, respectively. The coils in the first to fifth reference examples each include the electric wire wound once around central axis 2, similarly to coil 100A shown in Fig. 1.

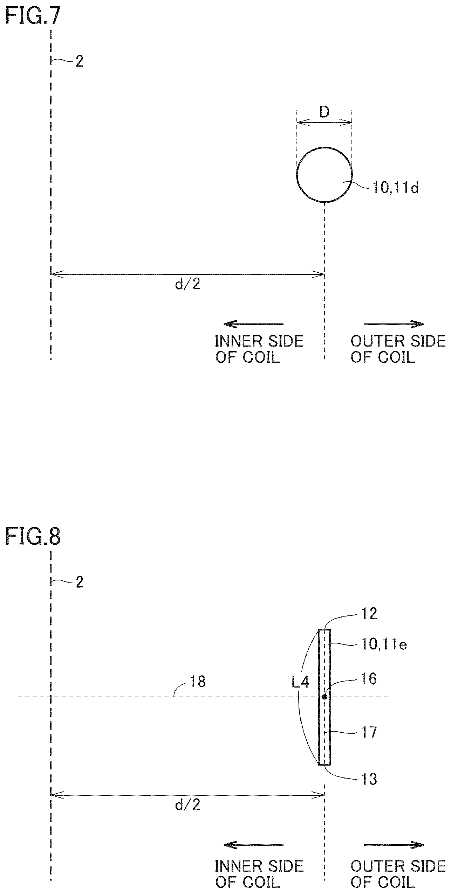

Fig. 7 is a cross-sectional view showing the coil in the first reference example. As shown in Fig. 7, the electric wire provided in the coil in the first reference example includes conductor 10 having a circular cross-sectional shape 11d in the plane including central axis 2. A diameter D of cross-sectional shape 11d is calculated from the conductor cross-sectional area (the area of cross-sectional shape 11d) that is required.

Fig. 8 is a cross-sectional view showing the coil in the second reference example. As shown in Fig. 8, the electric wire provided in the coil in the second reference example includes conductor 10 having a cross-sectional shape 11e in an I shape in the plane including central axis 2. Cross-sectional shape 11e is elongated similarly to cross-sectional shapes 11a to 11c. Cross-sectional shape 11e, however, is linear. Reference straight line 18 that passes through central point 16 of cross-sectional shape 11e and is orthogonal to line segment 17 that connects first end 12 and second end 13 to each other defines the posture of conductor 10 having cross-sectional shape 11e. As shown in Fig. 8, reference straight line 18 is orthogonal to central axis 2. In other words, cross-sectional shape 11e extends along central axis 2. A length L4 in the longitudinal direction of cross-sectional shape 11e is calculated from interval t between an edge on a side of central axis 2 of cross-sectional shape 11e and an edge opposite to central axis 2 and the conductor cross-sectional area (the area of cross-sectional shape 11e) that is required.

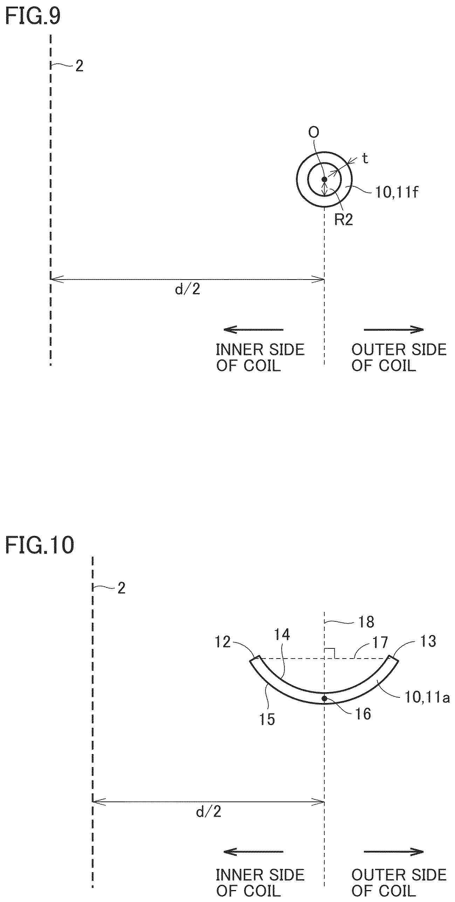

Fig. 9 is a cross-sectional view showing the coil in the third reference example. As shown in Fig. 9, the electric wire provided in the coil in the third reference example includes conductor 10 having a cross-sectional shape 11f in an O shape in the plane including central axis 2. An inner diameter R2 of cross-sectional shape 11f is calculated from interval t between an outer circumferential edge and an inner circumferential edge of cross-sectional shape 11f and the conductor cross-sectional area (the area of cross-sectional shape 11d) that is required.

Fig. 10 is a cross-sectional view showing the coil in the fourth reference example. As shown in Fig. 10, the electric wire provided in the coil in the fourth reference example includes conductor 10 having cross-sectional shape 11a the same as in the first example shown in Fig. 2. In the fourth reference example, however, conductor 10 is arranged such that reference straight line 18 is in parallel to central axis 2. In other words, conductor 10 in the fourth reference example takes a posture obtained by turning reference straight line 18 by 90° from the posture of conductor 10 in the first example on the plane including central axis 2.

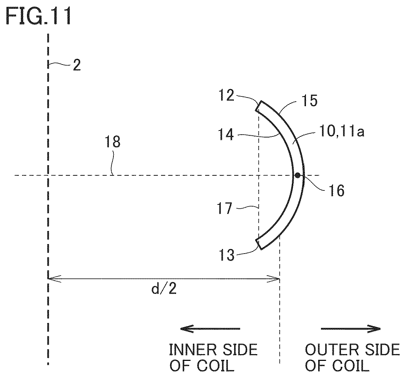

Fig. 11 is a cross-sectional view showing the coil in the fifth reference example. As shown in Fig. 11, the electric wire provided in the coil in the fifth reference example includes conductor 10 having cross-sectional shape 11a the same as in the first example shown in Fig. 2. In the fifth reference example, however, conductor 10 is arranged such that concave first edge 14 is opposed to central axis 2 and convex second edge 15 faces the outside of the coil. In other words, conductor 10 in the fifth reference example takes a posture obtained by turning reference straight line 18 by 180° from the posture of conductor 10 in the first example on the plane including central axis 2.

Table 2 shows a list of cross-sectional shapes of the conductors employed for the models to be evaluated. The cross-sectional shape is designed to have a cross-sectional area of 2 mm² in the plane including central axis 2. The cross-sectional shape No. 1 has circular cross-sectional shape 11d shown in Fig. 7. The cross-sectional shape No. 2 has cross-sectional shape 11e in the I shape shown in Fig. 8. Length L4 of the cross-sectional shape No. 2 is designed such that interval t is 0.4 mm. The cross-sectional shape No. 3 has cross-sectional shape 11f in the O shape shown in Fig. 9. Inner diameter R2 of the cross-sectional shape No. 3 is designed such that interval t is 0.4 mm. The cross-sectional shapes Nos. 4 to 9 each have cross-sectional shape 11b in the V shape shown in Fig. 3 and they are different from one another in angle θv. Lengths L1 of the cross-sectional shapes Nos. 4 to 9 are designed such that interval t is 0.4 mm and angle θv is from 90° to 165° (15° intervals). The cross-sectional shapes Nos. 10 to 15 each have cross-sectional shape 11c in the U shape shown in Fig. 4 and they are different from one another in angle θu. Lengths L3 of the cross-sectional shapes Nos. 10 to 15 are designed such that interval t is 0.4 mm, length L2 is 2.5 mm, and angle θu is from 90° to 165° (15° intervals). The cross-sectional shapes Nos. 16 to 38 have cross-sectional shape 11a in the arc shape shown in Fig. 2 and they are different from one another in central angle θs. Radii R1 of the cross-sectional shapes Nos. 16 to 38 are designed such that interval t is 0.4 mm and central angle θs is from 15° to 345° (15° intervals).

[Table 2]

| Shape No. | Cross-Sectional Shape of Conductor | |
|---|---|---|
| 1 | Circular | D = 1.59577 mm |
| 2 | I shape | t = 0.4 mm, L4 = 5.0 mm |
| 3 | O shape | t = 0.4 mm, R2 = 0.59577 mm |
| 4 | V shape | θv = 90°, t = 0.4 mm, L1 = 2.7 mm |
| 5 | V shape | θv = 105°, t = 0.4 mm, L1 = 2.65347 mm |
| 6 | V shape | θv = 120°, t = 0.4 mm, L1 = 2.61547 mm |
| 7 | V shape | θv = 135°, t = 0.4 mm, L1 = 2.58284 mm |
| 8 | V shape | θv = 150°, t = 0.4 mm, L1 = 2.55359 mm |
| 9 | V shape | θv = 165°, t = 0.4 mm, L1 = 2.52633 mm |
| 10 | U shape | θu = 90°, t = 0.4 mm, L2 = 2.5 mm, L3 = 1.65 mm |
| 11 | U shape | θu = 105°, t = 0.4 mm, L2 = 2.5 mm, L3 = 1.55693 mm |
| 12 | U shape | θu = 120°, t = 0.4 mm, L2 = 2.5 mm, L3 = 1.48094 mm |
| 13 | U shape | θu = 135°, t = 0.4 mm, L2 = 2.5 mm, L3 = 1.41569 mm |
| 14 | U shape | θu = 150°, t = 0.4 mm, L2 = 2.5 mm, L3 = 1.35718 mm |
| 15 | U shape | θu = 165°, t = 0.4 mm, L2 = 2.5 mm, L3 = 1.30266 mm |
| 16 | Arc Shape | θs = 15°, t = 0.4 mm, R1 = 18.90 mm |
| 17 | Arc Shape | θs = 30°, t = 0.4 mm, R1 = 9.35 mm |
| 18 | Arc Shape | θs = 45°, t = 0.4 mm, R1 = 6.17 mm |
| 19 | Arc Shape | θs = 60°, t = 0.4 mm, R1 = 4.57 mm |
| 20 | Arc Shape | θs = 75°, t = 0.4 mm, R1 = 3.62 mm |
| 21 | Arc Shape | θs = 90°, t = 0.4 mm, R1 = 2.98 mm |
| 22 | Arc Shape | θs = 105°, t = 0.4 mm, R1 = 2.53 mm |
| 23 | Arc Shape | θs = 120°, t = 0.4 mm, R1 = 2.19 mm |
| 24 | Arc Shape | θs = 135°, t = 0.4 mm, R1 = 1.92 mm |
| 25 | Arc Shape | θs = 150°, t = 0.4 mm, R1 = 1.71 mm |
| 26 | Arc Shape | θs = 165°, t = 0.4 mm, R1 = 1.54 mm |
| 27 | Arc Shape | θs = 180°, t = 0.4 mm, R1 = 1.39 mm |
| 28 | Arc Shape | θs = 195°, t = 0.4 mm, R1 = 1.27 mm |
| 29 | Arc Shape | θs = 210°, t = 0.4 mm, R1 = 1.16 mm |
| 30 | Arc Shape | θs = 225°, t = 0.4 mm, R1 = 1.07 mm |
| 31 | Arc Shape | θs = 240°, t = 0.4 mm, R1 = 0.993 mm |
| 32 | Arc Shape | θs = 255°, t = 0.4 mm, R1 = 0.923 mm |
| 33 | Arc Shape | θs = 270°, t = 0.4 mm, R1 = 0.861 mm |
| 34 | Arc Shape | θs = 285°, t = 0.4 mm, R1 = 0.805 mm |

(continued)

| Shape No. | Cross-Sectional Shape of Conductor | |
|---|---|---|
| 35 | Arc Shape | θs = 300°, t = 0.4 mm, R1 = 0.755 mm |
| 36 | Arc Shape | θs = 315°, t = 0.4 mm, R1 = 0.709 mm |
| 37 | Arc Shape | θs = 330°, t = 0.4 mm, R1 = 0.668 mm |
| 38 | Arc Shape | θs = 345°, t = 0.4 mm, R1 = 0.630 mm |

The models to be evaluated include models Nos. 1A to 38A, 27A1, and 27A2. The model No. 1A corresponds to the coil (the coil in the first reference example shown in Fig. 7) where the electric wire including the conductor having the cross-sectional shape No. 1 is wound once around central axis 2. The model No. 2A corresponds to the coil (the coil in the second reference example shown in Fig. 8) where the electric wire including the conductor having the cross-sectional shape No. 2 is wound once around central axis 2 and reference straight line 18 of the cross-sectional shape is orthogonal to central axis 2. The model No. 3A corresponds to the coil (the coil in the third reference example shown in Fig. 9) where the electric wire including the conductor having the cross-sectional shape No. 3 is wound once around central axis 2.

The models Nos. 4A to 9A correspond to the coils (coil 100A in the second example shown in Fig. 3) where the electric wires including the conductors having the cross-sectional shapes Nos. 4 to 9 are wound once around central axis 2, respectively.

The models Nos. 10A to 15A correspond to coils (coil 100A in the third example shown in Fig. 4) where the electric wires including the conductors having the cross-sectional shapes Nos. 10 to 15 are wound once around central axis 2, respectively.

The models Nos. 16A to 38A correspond to coils (coil 100A in the first example shown in Fig. 2) where the electric wires including the conductors having the cross-sectional shapes Nos. 16 to 38 are wound once around central axis 2, respectively. The models Nos. 4A to 38A correspond to the coils including such conductors that second edge 15 is opposed to central axis 2 and reference straight line 18 is orthogonal to central axis 2.

The model No. 27A1 corresponds to the coil (the coil in the fourth reference example shown in Fig. 10) where the electric wire including the conductor having the cross-sectional shape No. 27 is wound once around central axis 2 in such a posture that reference straight line 18 is in parallel to central axis 2.

The model No. 27A2 corresponds to the coil (the coil in the fifth reference example shown in Fig. 11) where the electric wire including the conductor having the cross-sectional shape No. 27 is wound once around central axis 2 in such a posture that first edge 14 is opposed to central axis 2 and reference straight line 18 is orthogonal to central axis 2.

Table 3 shows results of simulation when coil diameter d of each model is set to 50 mm. Furthermore, Table 4 shows results of simulation when coil diameter d of each model is set to 100 mm. Tables 3 and 4 each show a quality factor at each frequency. The quality factor is expressed as $2\pi fL/R$ with L representing an inductance and R representing a resistance. As the quality factor is larger, loss is less.

[Table 3]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 1A | 0.0 | 0.0 | 0.1 | 0.6 | 5.3 | 24.3 | 82.1 | 262.1 | 708.9 |
| 2A | 0.0 | 0.0 | 0.0 | 0.5 | 4.3 | 27.5 | 96.5 | 303.4 | 809.5 |
| 3A | 0.0 | 0.0 | 0.1 | 0.5 | 5.0 | 30.4 | 96.3 | 306.3 | 822.0 |
| 4A | 0.0 | 0.0 | 0.0 | 0.5 | 4.6 | 27.6 | 93.4 | 293.0 | 787.0 |
| 5A | 0.0 | 0.0 | 0.0 | 0.5 | 4.5 | 28.0 | 95.8 | 301.6 | 802.4 |
| 6A | 0.0 | 0.0 | 0.0 | 0.5 | 4.5 | 28.3 | 97.3 | 306.2 | 819.5 |
| 7A | 0.0 | 0.0 | 0.0 | 0.5 | 4.4 | 28.2 | 97.9 | 308.3 | 825.3 |
| 8A | 0.0 | 0.0 | 0.0 | 0.5 | 4.4 | 28.1 | 97.9 | 308.2 | 825.3 |
| 9A | 0.0 | 0.0 | 0.0 | 0.5 | 4.3 | 27.8 | 97.4 | 306.5 | 820.6 |
| 10A | 0.0 | 0.0 | 0.0 | 0.5 | 4.8 | 27.9 | 91.2 | 285.6 | 778.2 |
| 11A | 0.0 | 0.0 | 0.0 | 0.5 | 4.7 | 28.7 | 95.3 | 299.8 | 796.3 |
| 12A | 0.0 | 0.0 | 0.0 | 0.5 | 4.6 | 29.0 | 97.8 | 308.0 | 823.7 |

(continued)

| No. | 1 Hz | 10 Hz | 100 Hz | 1 kHz | 10 kHz | 100 kHz | 1 MHz | 10 MHz | 100 MHz |
|-----|------|-------|--------|-------|--------|---------|-------|--------|---------|
| 13A | 0.0 | 0.0 | 0.0 | 0.5 | 4.5 | 28.9 | 98.9 | 311.8 | 840.0 |
| 14A | 0.0 | 0.0 | 0.0 | 0.5 | 4.4 | 28.6 | 98.9 | 311.6 | 834.6 |
| 15A | 0.0 | 0.0 | 0.0 | 0.5 | 4.4 | 28.0 | 98.0 | 308.5 | 824.1 |
| 16A | 0.0 | 0.0 | 0.0 | 0.5 | 4.3 | 27.7 | 97.2 | 305.9 | 817.7 |
| 17A | 0.0 | 0.0 | 0.0 | 0.5 | 4.3 | 28.0 | 97.9 | 308.3 | 824.8 |
| 18A | 0.0 | 0.0 | 0.0 | 0.5 | 4.4 | 28.2 | 98.5 | 310.4 | 836.0 |
| 19A | 0.0 | 0.0 | 0.0 | 0.5 | 4.4 | 28.5 | 99.1 | 311.1 | 832.3 |
| 20A | 0.0 | 0.0 | 0.0 | 0.5 | 4.4 | 28.7 | 99.6 | 313.1 | 848.6 |
| 21A | 0.0 | 0.0 | 0.0 | 0.5 | 4.4 | 29.0 | 100.1 | 315.9 | 860.4 |
| 22A | 0.0 | 0.0 | 0.0 | 0.5 | 4.4 | 29.2 | 100.5 | 317.3 | 856.7 |
| 23A | 0.0 | 0.0 | 0.0 | 0.5 | 4.5 | 29.4 | 100.8 | 318.1 | 854.1 |
| 24A | 0.0 | 0.0 | 0.0 | 0.5 | 4.5 | 29.6 | 101.1 | 318.5 | 879.1 |
| 25A | 0.0 | 0.0 | 0.0 | 0.5 | 4.5 | 29.8 | 101.3 | 320.5 | 870.4 |
| 26A | 0.0 | 0.0 | 0.0 | 0.5 | 4.6 | 30.0 | 101.4 | 320.0 | 855.2 |
| 27A | 0.0 | 0.0 | 0.0 | 0.5 | 4.6 | 30.2 | 101.4 | 319.8 | 879.5 |
| 28A | 0.0 | 0.0 | 0.0 | 0.5 | 4.6 | 30.4 | 101.4 | 320.1 | 874.3 |
| 29A | 0.0 | 0.0 | 0.0 | 0.5 | 4.6 | 30.6 | 101.3 | 320.6 | 880.7 |
| 30A | 0.0 | 0.0 | 0.0 | 0.5 | 4.7 | 30.7 | 101.2 | 319.5 | 874.6 |
| 31A | 0.0 | 0.0 | 0.0 | 0.5 | 4.7 | 30.8 | 101.0 | 319.2 | 862.8 |
| 32A | 0.0 | 0.0 | 0.0 | 0.5 | 4.8 | 30.9 | 100.7 | 318.6 | 858.9 |
| 33A | 0.0 | 0.0 | 0.0 | 0.5 | 4.8 | 31.0 | 100.3 | 318.5 | 877.0 |
| 34A | 0.0 | 0.0 | 0.0 | 0.5 | 4.8 | 31.1 | 99.9 | 317.8 | 875.4 |
| 35A | 0.0 | 0.0 | 0.0 | 0.5 | 4.9 | 31.1 | 99.4 | 315.5 | 864.3 |
| 36A | 0.0 | 0.0 | 0.0 | 0.5 | 4.9 | 31.1 | 98.8 | 312.7 | 843.3 |
| 37A | 0.0 | 0.0 | 0.0 | 0.5 | 5.0 | 31.0 | 98.0 | 310.9 | 833.4 |
| 38A | 0.0 | 0.0 | 0.1 | 0.5 | 5.0 | 30.8 | 97.2 | 308.6 | 835.8 |
| 27A1 | 0.0 | 0.0 | 0.0 | 0.5 | 4.5 | 28.1 | 95.3 | 299.5 | 819.5 |
| 27A2 | 0.0 | 0.0 | 0.0 | 0.5 | 4.4 | 26.5 | 91.0 | 285.1 | 780.3 |

[Table 4]

| No. | 1 Hz | 10 Hz | 100 Hz | 1 kHz | 10 kHz | 100 kHz | 1 MHz | 10 MHz | 100 MHz |
|-----|------|-------|--------|-------|--------|---------|-------|--------|---------|
| 1A | 0.0 | 0.0 | 0.1 | 0.7 | 6.3 | 29.1 | 98.8 | 315.6 | 853.9 |
| 2A | 0.0 | 0.0 | 0.1 | 0.6 | 5.3 | 33.9 | 119.6 | 376.6 | 1005.0 |
| 3A | 0.0 | 0.0 | 0.1 | 0.6 | 6.1 | 36.9 | 117.4 | 373.8 | 1005.4 |
| 4A | 0.0 | 0.0 | 0.1 | 0.6 | 5.6 | 33.3 | 113.9 | 358.2 | 963.8 |
| 5A | 0.0 | 0.0 | 0.1 | 0.6 | 5.5 | 33.9 | 116.8 | 368.2 | 978.4 |
| 6A | 0.0 | 0.0 | 0.1 | 0.6 | 5.4 | 34.2 | 118.8 | 374.2 | 1000.8 |
| 7A | 0.0 | 0.0 | 0.1 | 0.6 | 5.4 | 34.3 | 119.9 | 377.8 | 1011.3 |
| 8A | 0.0 | 0.0 | 0.1 | 0.6 | 5.3 | 34.3 | 120.3 | 379.1 | 1012.6 |

(continued)

| No. | 1 Hz | 10 Hz | 100 Hz | 1 kHz | 10 kHz | 100 kHz | 1 MHz | 10 MHz | 100 MHz |
|-----|------|-------|--------|-------|--------|---------|-------|--------|---------|
| 9A | 0.0 | 0.0 | 0.1 | 0.6 | 5.3 | 34.1 | 120.2 | 378.8 | 1013.5 |
| 10A | 0.0 | 0.0 | 0.1 | 0.6 | 5.8 | 33.6 | 111.0 | 348.4 | 948.3 |
| 11A | 0.0 | 0.0 | 0.1 | 0.6 | 5.6 | 34.6 | 115.8 | 364.8 | 971.2 |
| 12A | 0.0 | 0.0 | 0.1 | 0.6 | 5.5 | 35.0 | 118.9 | 374.8 | 1003.6 |
| 13A | 0.0 | 0.0 | 0.1 | 0.6 | 5.4 | 35.0 | 120.5 | 380.1 | 1023.1 |
| 14A | 0.0 | 0.0 | 0.1 | 0.6 | 5.4 | 34.7 | 121.0 | 381.6 | 1023.5 |
| 15A | 0.0 | 0.0 | 0.1 | 0.6 | 5.3 | 34.3 | 120.6 | 380.1 | 1013.3 |
| 16A | 0.0 | 0.0 | 0.1 | 0.6 | 5.3 | 34.1 | 120.1 | 378.6 | 1013.5 |
| 17A | 0.0 | 0.0 | 0.1 | 0.6 | 5.3 | 34.2 | 120.6 | 380.3 | 1015.4 |
| 18A | 0.0 | 0.0 | 0.1 | 0.6 | 5.3 | 34.4 | 121.0 | 381.7 | 1025.4 |
| 19A | 0.0 | 0.0 | 0.1 | 0.6 | 5.3 | 34.6 | 121.4 | 381.5 | 1020.3 |
| 20A | 0.0 | 0.0 | 0.1 | 0.6 | 5.4 | 34.8 | 121.8 | 382.9 | 1035.8 |
| 21A | 0.0 | 0.0 | 0.1 | 0.6 | 5.4 | 35.0 | 122.1 | 385.6 | 1047.5 |
| 22A | 0.0 | 0.0 | 0.1 | 0.6 | 5.4 | 35.2 | 122.4 | 386.7 | 1042.6 |
| 23A | 0.0 | 0.0 | 0.1 | 0.6 | 5.4 | 35.5 | 122.6 | 385.7 | 1042.0 |
| 24A | 0.0 | 0.0 | 0.1 | 0.6 | 5.5 | 35.7 | 122.7 | 386.8 | 1063.6 |
| 25A | 0.0 | 0.0 | 0.1 | 0.6 | 5.5 | 35.9 | 122.8 | 389.0 | 1057.0 |
| 26A | 0.0 | 0.0 | 0.1 | 0.6 | 5.5 | 36.1 | 122.9 | 388.3 | 1037.9 |
| 27A | 0.0 | 0.0 | 0.1 | 0.6 | 5.6 | 36.3 | 122.9 | 387.3 | 1062.3 |
| 28A | 0.0 | 0.0 | 0.1 | 0.6 | 5.6 | 36.5 | 122.8 | 387.6 | 1056.9 |
| 29A | 0.0 | 0.0 | 0.1 | 0.6 | 5.6 | 36.7 | 122.7 | 388.5 | 1065.0 |
| 30A | 0.0 | 0.0 | 0.1 | 0.6 | 5.7 | 36.8 | 122.5 | 387.3 | 1060.8 |
| 31A | 0.0 | 0.0 | 0.1 | 0.6 | 5.7 | 37.0 | 122.3 | 387.4 | 1043.1 |
| 32A | 0.0 | 0.0 | 0.1 | 0.6 | 5.7 | 37.2 | 122.1 | 386.7 | 1040.9 |
| 33A | 0.0 | 0.0 | 0.1 | 0.6 | 5.8 | 37.3 | 121.8 | 386.2 | 1062.0 |
| 34A | 0.0 | 0.0 | 0.1 | 0.6 | 5.8 | 37.5 | 121.3 | 385.7 | 1061.6 |
| 35A | 0.0 | 0.0 | 0.1 | 0.6 | 5.9 | 37.5 | 120.8 | 384.2 | 1057.6 |
| 36A | 0.0 | 0.0 | 0.1 | 0.6 | 5.9 | 37.6 | 120.1 | 380.9 | 1028.4 |
| 37A | 0.0 | 0.0 | 0.1 | 0.6 | 6.0 | 37.5 | 119.3 | 378.8 | 1015.3 |
| 38A | 0.0 | 0.0 | 0.1 | 0.6 | 6.0 | 37.3 | 118.3 | 376.1 | 1020.1 |
| 27A1 | 0.0 | 0.0 | 0.1 | 0.6 | 5.5 | 34.8 | 118.7 | 373.7 | 1023.9 |
| 27A2 | 0.0 | 0.0 | 0.1 | 0.6 | 5.4 | 33.6 | 115.3 | 362.3 | 990.3 |

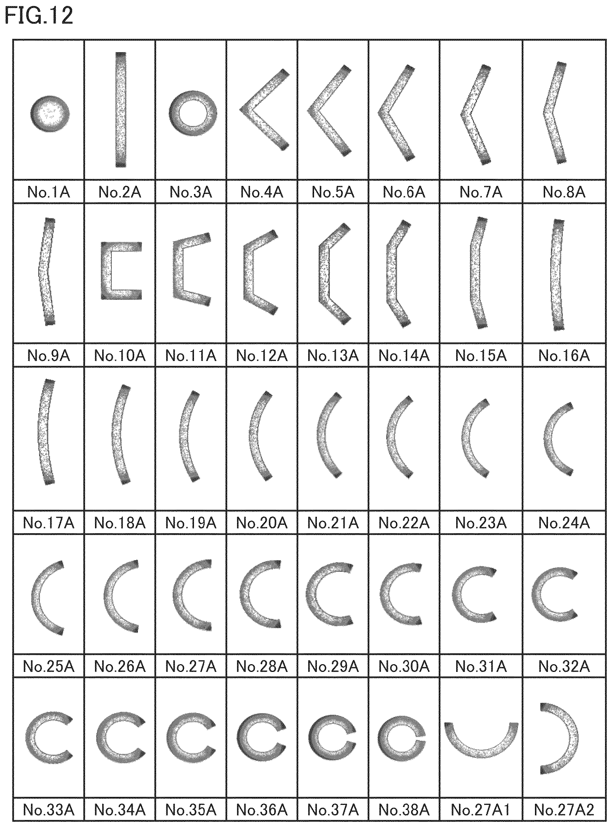

Fig. 12 is a diagram showing a distribution of a current in the cross-section of the conductor in each of models Nos. 1A to 38A, 27A1, and 27A2 when the frequency is set to 100 kHz. Fig. 12 shows the distribution of the current when coil diameter d of each model is set to 50 mm. Fig. 12 shows the distribution of the current in the cross-section of the conductor where central axis 2 is present on the left side.

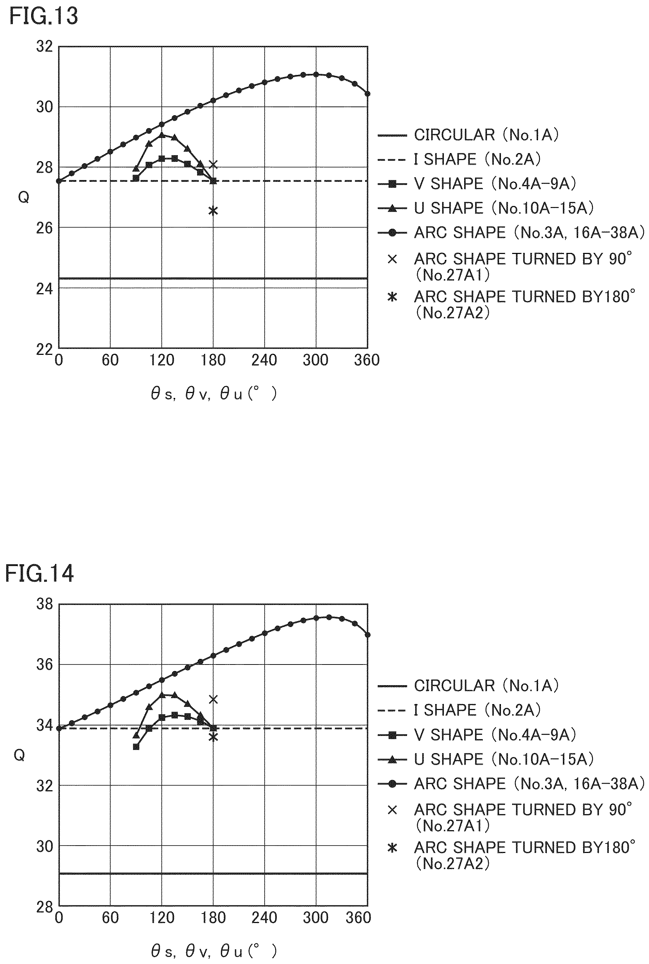

Fig. 13 shows a graph of the quality factor of each model in the first embodiment when coil diameter d is set to 50 mm and the frequency is set to 100 kHz. Fig. 14 shows a graph of the quality factor of each model in the first embodiment when coil diameter d is set to 100 mm and the frequency is set to 100 kHz. In Figs. 13 and 14, the abscissa represents central angle $\theta s$ or angle $\theta v$ or $\theta u$, and the ordinate represents the quality factor. In Figs. 13 and 14, a point at $\theta s = 360°$ indicates a value obtained from the model corresponding to the coil in the third reference example. A point at $\theta s = 0°$ and a

point at θv or θu = 180° each indicate a value obtained from the model corresponding to the coil in the second reference example.

As shown in Figs. 13 and 14, the models Nos. 4A to 38A corresponding to the coils in the first to third examples are larger in quality factor than the model No. 1 corresponding to the first reference example that has the circular cross-sectional shape. This is because, as shown in Fig. 12, uneven distribution of the current is noticeable in the model No. 1A corresponding to the first reference example that has the circular cross-sectional shape, whereas uneven distribution of the current is suppressed in the models Nos. 4A to 38A corresponding to the coils in the first to third examples.

Tendency that the models Nos. 16A to 38A corresponding to the coils (in the arc shape) in the first example are larger in quality factor than the models Nos. 4A to 15A corresponding to the coils (in the V shape and the U shape) in the second example and the third example is observed. This is because uneven distribution of the current in bent portions 20 to 22 is likely in the conductors in the V shape and the U shape including bent portions 20 to 22 as shown in Fig. 12, whereas uneven distribution of the current originating from the bent portion is suppressed in the conductor in the arc shape.

The models Nos. 27A, 27A1, and 27A2 each correspond to the coil including the conductor in the arc shape having θs = 180°. The model No. 27A corresponding to the coil in the first example, however, is found to be larger in quality factor than the models Nos. 27A1 and 27A2 corresponding to the coils in the respective fourth and fifth reference examples. This is because uneven distribution of the current is suppressed as shown in Fig. 12 by convex second edge 15 (see Fig. 2) being opposed to central axis 2.

As shown in Figs. 13 and 14, the models having central angles $\theta_S$ from 15° to 345° among the models corresponding to the coils including the conductors in the arc shape were confirmed to be larger in quality factor than the models corresponding to the coil including the conductor having the circular cross-section and the coil including the conductor having the cross-sectional shape in the I shape. The models having the central angle $\theta_S$ from 105° to 345° were confirmed to be larger in quality factor than the models corresponding to the coils including the conductors in other cross-sectional shapes. It was confirmed that the quality factor was further larger when central angle $\theta_S$ was from 180° to 345° and the quality factor was still larger when central angle $\theta_S$ was from 240° to 345°.

Among the models each corresponding to the coil including the conductor in the V shape, a model was confirmed to be large in quality factor when angle θv was from 105° to 165° and a model was confirmed to particularly be large in quality factor when angle θv was from 120° to 150°.

Among the models each corresponding to the coil including the conductor in the U shape, a model was confirmed to be large in quality factor when angle θu was from 105° to 165° and a model was confirmed to particularly be large in quality factor when angle θu was from 105° to 150°.

<Second Embodiment>

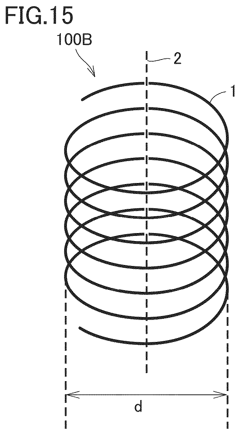

Fig. 15 is a perspective view of an appearance of a coil according to a second embodiment. As shown in Fig. 15, a coil 100B according to the second embodiment is different from coil 100A according to the first embodiment in that electric wire 1 is helically wound around central axis 2 a plurality of times.

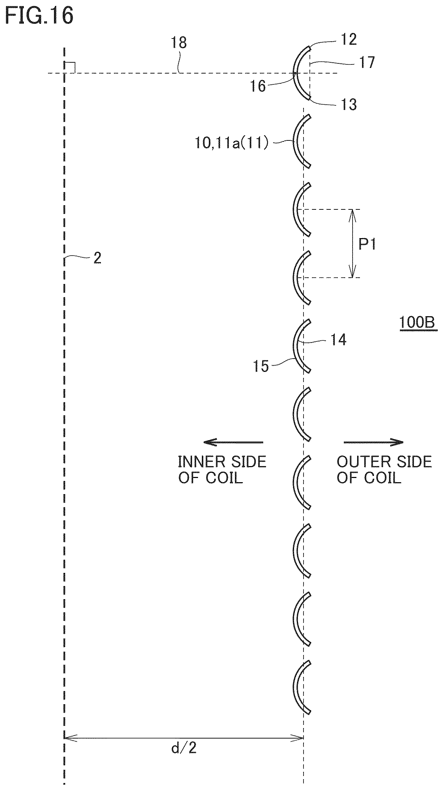

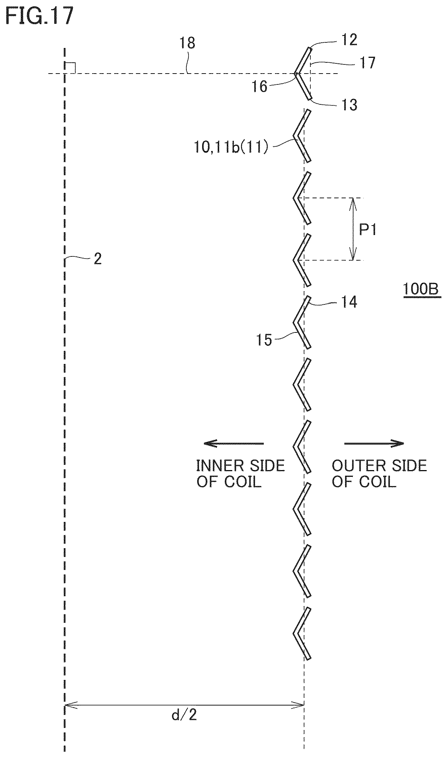

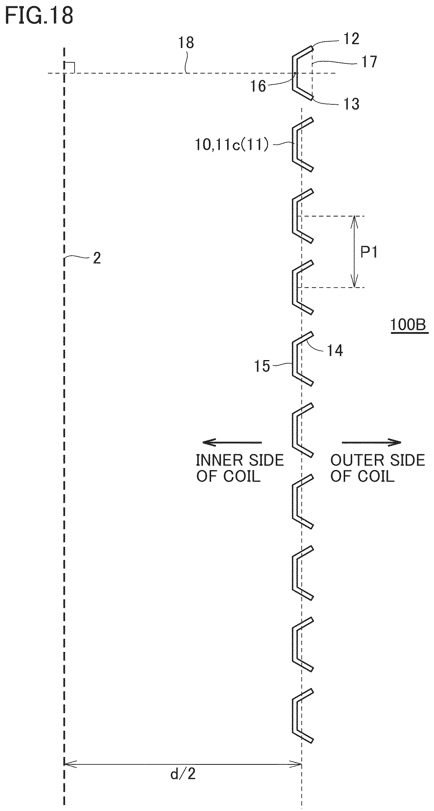

Fig. 16 is a cross-sectional view showing a coil in a fourth example. Fig. 17 is a cross-sectional view showing a coil in a fifth example. Fig. 18 is a cross-sectional view showing a coil in a sixth example. Figs. 16 to 18 each show the cross-sectional view of coil 100B in the plane including central axis 2. As shown in Figs. 16 to 18, electric wire 1 is helically wound around central axis 2 a plurality of times such that the distance from central axis 2 is d/2. d represents the coil diameter. Figs. 16 to 18 show only a part of coil 100B. In other words, Figs. 16 to 18 do not show the cross-section of coil 100B present on the left side of central axis 2.

As shown in Figs. 16 to 18, electric wire 1 according to the second embodiment has characteristics as in the first embodiment.

Specifically, electric wire 1 includes conductor 10 having non-circular cross-sectional shape 11 in the plane including central axis 2. In order to avoid or bypass a location where a current is less likely to flow, cross-sectional shape 11 is elongated and bent in such a manner that first end 12 which is one end in the longitudinal direction and second end 13 which is the other end in the longitudinal direction are away from central axis 2. First end 12 and second end 13 are preferably formed as being tapered such that first end 12 and second end 13 as a whole are rounded.

Cross-sectional shape 11 is preferably in line symmetry with respect to reference straight line 18 that passes through central point 16 and is orthogonal to line segment 17 that connects first end 12 and second end 13 to each other. Reference straight line 18 is preferably orthogonal to central axis 2 at any position in electric wire 1.

Furthermore, concave first edge 14 faces the outside of coil 100B and convex second edge 15 is opposed to central axis 2. Cross-sectional shape 11 is preferably formed such that interval t between first edge 14 and second edge 15 is constant. Interval t is preferably at most two times as large as a skin depth (a depth at which the current is 1/e of a surface current) at a useful frequency of coil 100B.

As shown in Fig. 16, cross-sectional shape 11a of conductor 10 included in coil 100B in the fourth example is in the arc shape as in the first example in the first embodiment shown in Fig. 2. In winding of conductor 10 having cross-sectional shape 11a such that coil diameter d is set to 50 mm, based on a result of simulation which will be described later, central angle θs is preferably from 15° to 330°, more preferably from 60° to 285°, further preferably from 90° to 240°, and particularly preferably from 105° to 240°. In winding of conductor 10 having cross-sectional shape 11a such that coil diameter d is set to 100 mm, central angle θs is preferably from 60° to 345°, more preferably from 120° to 345°, and further preferably from 180° to 300°. As central angle $\theta_S$ has the values above, uneven distribution of the current is more effectively suppressed.

As shown in Fig. 17, cross-sectional shape 11b of conductor 10 included in coil 100B in the fifth example is in the V shape as in the second example in the first embodiment shown in Fig. 3. In winding of conductor 10 having cross-sectional shape 11b such that coil diameter d is set to 50 mm, based on a result of simulation which will be described later, angle θv formed on the inner side of bent portion 20 is preferably from 120° to 165°. In winding of conductor 10 having cross-sectional shape 11b such that coil diameter d is set to 100 mm, angle θv is preferably from 90° to 165°, more preferably from 105° to 165°, and further preferably from 120° to 165°. As angle θv has the values above, uneven distribution of the current is more effectively suppressed.

As shown in Fig. 18, cross-sectional shape 11c of conductor 10 included in coil 100B in the sixth example is in the U shape as in the third example in the first embodiment shown in Fig. 4. In winding of conductor 10 having cross-sectional shape 11c such that coil diameter d is set to 50 mm, based on a result of simulation which will be described later, angle θu formed on the inner side of bent portion 21 or 22 is preferably from 105° to 165°, more preferably from 120° to 165°, and further preferably from 120° to 150°. In winding of conductor 10 having cross-sectional shape 11c such that coil diameter d is set to 100 mm, angle θu is preferably from 90° to 165°, more preferably from 90° to 150°, and further preferably from 105° to 135°. As angle θu has the values above, uneven distribution of the current is more effectively suppressed.

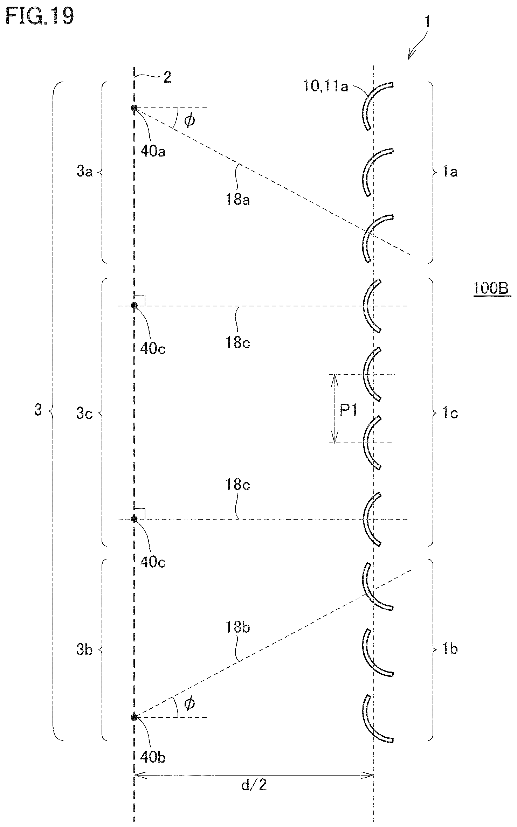

Fig. 19 is a cross-sectional view showing a coil in a seventh example. As shown in Fig. 19, cross-sectional shape 11a of conductor 10 included in coil 100B in the seventh example is in the arc shape as in the first example shown in Fig. 17. Coil 100B in the seventh example is different from coil 100B in the fourth example in that reference straight line 18 is not orthogonal to central axis 2 in a part of electric wire 1.

Electric wire 1 is helically wound around a target section 3 of central axis 2 at least three times. In the example shown in Fig. 19, electric wire 1 is wound ten times. Electric wire 1 includes a first portion 1a wound around a first section 3a located on a side of one end in target section 3, a second portion 1b wound around a second section 3b located on a side of the other end in target section 3, and a third portion 1c wound around a third section 3c located between first section 3a and second section 3b in target section 3. A reference straight line 18c in third portion 1c is orthogonal to central axis 2. A reference straight line 18a in first portion 1a is inclined with respect to reference straight line 18c corresponding to third portion 1c, in a direction in which intersections 40a and 40c with central axis 2 are away from each other. A reference straight line 18b in second portion 1b is inclined with respect to reference straight line 18c corresponding to third portion 1c, in a direction in which intersections 40b and 40c with central axis 2 are away from each other. A degree of inclination is expressed by an angle φ formed between reference straight line 18a or 18c and the line orthogonal to central axis 2.

Difference in posture of conductor 10 among first portion 1a, second portion 1b, and third portion 1c may be achieved by twist of electric wire 1 or by joint of first portion 1a, second portion 1b, and third portion 1c with postures of conductors 10 being different.

In the example shown in Fig. 19, the number of times of winding in each of first portion 1a and second portion 1b is set to three, and the number of times of winding in third portion 1c is set to four. The number of times of winding in first portion 1a, second portion 1b, and third portion 1c is not limited as such.

As shown with a result of simulation which will be described later, in conductor 10 in first portion 1a and second portion 1b, a current is likely to flow on a side far from third portion 1c. Therefore, as shown in Fig. 19, owing to inclination of reference straight lines 18a and 18b in first portion 1a and second portion 1b, conductor 10 is located in the portion where the current is likely to flow and uneven distribution of the current in conductor 10 is suppressed.

In the second embodiment as well, electric wire 1 may include an insulating material that covers conductor 10. As shown in Fig. 5, the insulating material may cover the entire conductor 10, or as shown in Fig. 6, the insulating material may cover a part of conductor 10. The insulating material may fully cover conductor 10 that extends along central axis 2 as being helically wound a plurality of times.

(Simulation)

Models of the plurality of coils different in cross-sectional shape and posture of the conductor were evaluated in accordance with the method the same as in the first embodiment.

The models to be evaluated include models corresponding to coils in sixth to eleventh reference examples shown below, in addition to the models corresponding to the coils in the fourth to seventh examples shown in Figs. 16 to 19, respectively. The coils in the sixth to eleventh reference examples each include an electric wire helically wound around central axis 2 a plurality of times, similarly to coil 100B shown in Fig. 15.

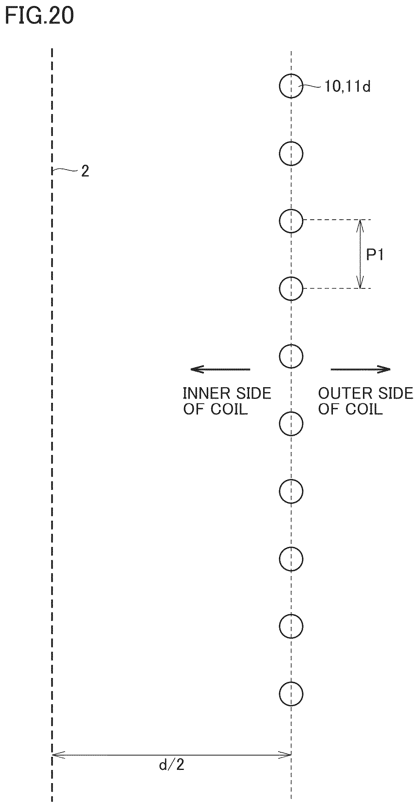

Fig. 20 is a cross-sectional view showing the coil in the sixth reference example. As shown in Fig. 20, cross-sectional shape 11d of conductor 10 included in the coil in the sixth reference example is circular as in the first reference example shown in Fig. 7, and it is defined by diameter D (see Fig. 7).

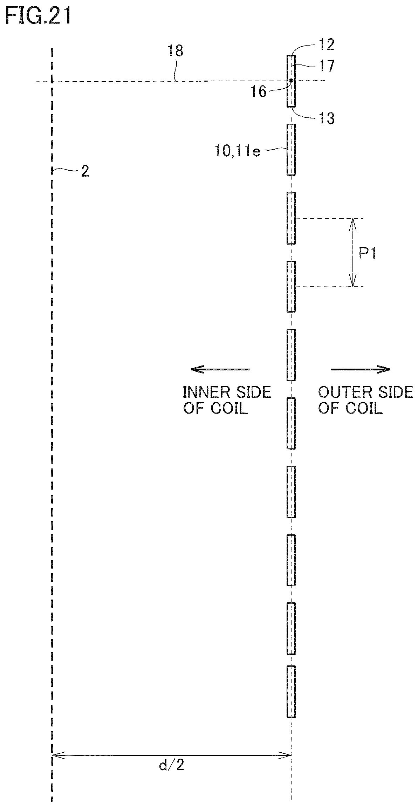

Fig. 21 is a cross-sectional view showing the coil in the seventh reference example. As shown in Fig. 21, cross-sectional shape 11e of conductor 10 included in the coil in the seventh reference example is in the I shape as in the second reference example shown in Fig. 8, and it is defined by length L4 (see Fig. 8) in the longitudinal direction and interval t (see Fig. 8) between the edge on the side of central axis 2 and the edge opposite to central axis 2. Reference straight line 18 is orthogonal to central axis 2 in any portion of the electric wire.

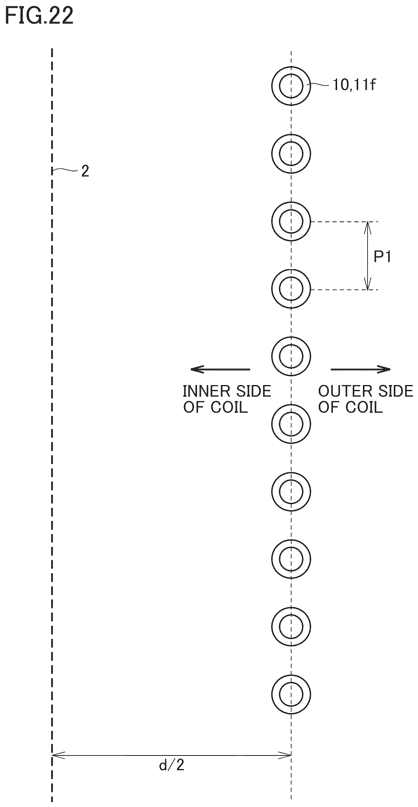

Fig. 22 is a cross-sectional view showing the coil in the eighth reference example. As shown in Fig. 22, a cross-sectional shape 11f of conductor 10 included in the coil in the eighth reference example is in the O shape as in the third reference example shown in Fig. 9, and it is defined by interval t (see Fig. 9) between the outer circumferential edge and the inner circumferential edge and inner diameter R2 (see Fig. 9).

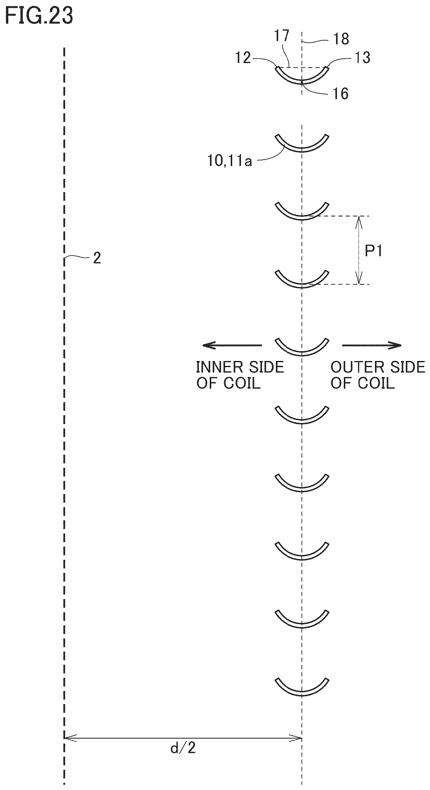

Fig. 23 is a cross-sectional view showing the coil in the ninth reference example. As shown in Fig. 23, the electric wire included in the coil in the ninth reference example includes conductor 10 having cross-sectional shape 11a as in the fourth example shown in Fig. 16. In the ninth reference example, electric wire 1 is arranged such that reference straight line 18 is in parallel to central axis 2 in any portion. Specifically, cross-sectional shape 11a in the ninth reference example takes a posture obtained by turning reference straight line 18 from the posture in the fourth example by 90° on the plane including central axis 2.

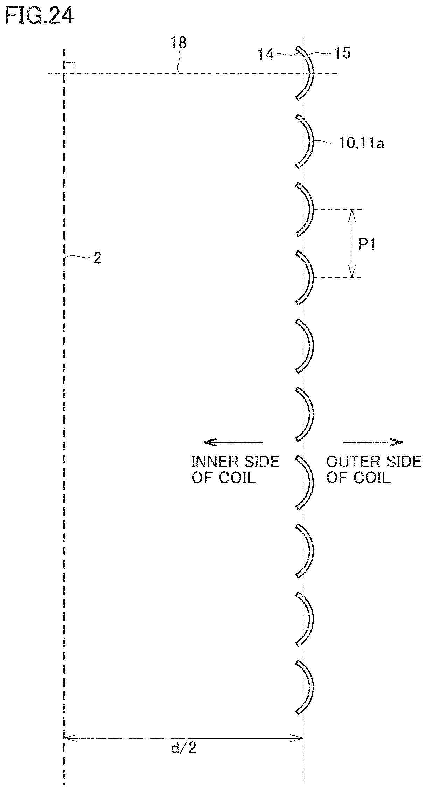

Fig. 24 is a cross-sectional view showing the coil in the tenth reference example. As shown in Fig. 24, the electric wire included in the coil in the tenth reference example includes conductor 10 having cross-sectional shape 11a as in the fourth example shown in Fig. 16. In the tenth reference example, electric wire 1 is arranged such that concave first edge 14 is opposed to central axis 2 and convex second edge 15 faces the outside of the coil. Specifically, cross-sectional shape 11a in the tenth reference example takes a posture obtained by turning reference straight line 18 from the posture in the fourth example by 180° on the plane including central axis 2.

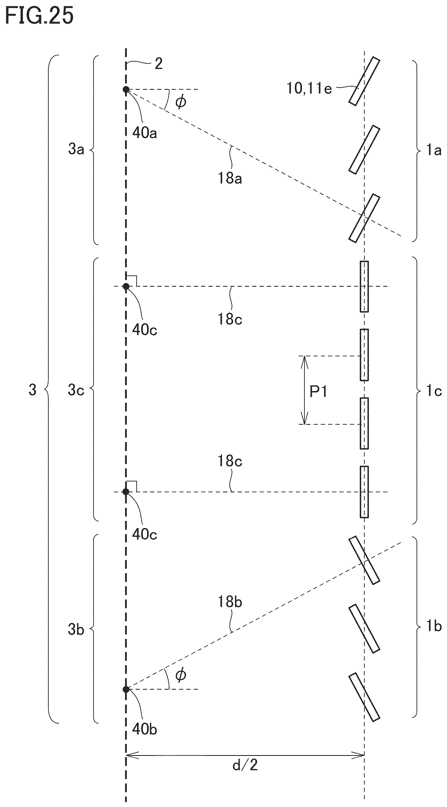

Fig. 25 is a cross-sectional view showing the coil in the eleventh reference example. As shown in Fig. 25, conductor 10 of the electric wire included in the coil in the eleventh reference example has cross-sectional shape 11e the same as in the seventh reference example shown in Fig. 21. The coil in the eleventh reference example is different from the coil in the seventh reference example in that reference straight line 18 is not orthogonal to central axis 2 in a part of the electric wire. Specifically, as in the seventh example, the electric wire includes first portion 1a wound around first section 3a located on the side of one end in target section 3, second portion 1b wound around second section 3b located on the side of the other end in target section 3, and third portion 1c wound around third section 3c located between first section 3a and second section 3b in target section 3. Reference straight line 18c in third portion 1c is orthogonal to central axis 2. Reference straight line 18a in first portion 1a is inclined with respect to reference straight line 18c corresponding to third portion 1c, in the direction in which intersections 40a and 40c with central axis 2 are away from each other. Reference straight line 18b in second portion 1b is inclined with respect to reference straight line 18c corresponding to third portion 1c, in the direction in which intersections 40b and 40c with central axis 2 are away from each other. The degree of inclination is expressed by angle $\phi$ formed between reference straight line 18a or 18c and a normal to central axis 2. The number of times of winding in each of first portion 1a and second portion 1b is set to three, and the number of times of winding in third portion 1c is set to four.

The models to be evaluated include models Nos. 1B to 38B, 2B1 to 2B3, 18B1 to 18B3, 21B1 to 21B3, 24B1 to 24B3, 27B1 to 27B5, and 30B1 to 30B3. The model No. 1B corresponds to the coil (the coil in the sixth reference example shown in Fig. 20) in which the electric wire including the conductor having the cross-sectional shape No. 1 shown in Table 2 is helically wound around central axis 2 ten times. The model No. 2B corresponds to the coil (the coil in the seventh reference example shown in Fig. 21) in which the electric wire including the conductor having the cross-sectional shape No. 2 is helically wound around central axis 2 ten times and reference straight line 18 in the cross-sectional shape is orthogonal to central axis 2. The model No. 3B corresponds to the coil (the coil in the eighth reference example shown in Fig. 22) in which the electric wire including the conductor having the cross-sectional shape No. 3 is helically wound around central axis 2 ten times.

The models Nos. 4B to 9B correspond to the coils (coil 100B in the fifth example shown in Fig. 17) in which the electric wires including the conductors having the cross-sectional shapes Nos. 4 to 9 are helically wound around central axis 2 ten times, respectively.

The models Nos. 10B to 15B correspond to the coils (coil 100B in the sixth example shown in Fig. 18) in which the electric wires including the conductors having the cross-sectional shapes Nos. 10 to 15 are helically wound around central axis 2 ten times, respectively.

The models Nos. 16B to 38B correspond to the coils (coil 100B in the fourth example shown in Fig. 16) in which the electric wires including the conductors having the cross-sectional shapes Nos. 16 to 38 are helically wound around central axis 2 ten times, respectively.

The models Nos. 4B to 38B each correspond to the coil including the conductor which takes such a posture that second edge 15 is opposed to central axis 2 and reference straight line 18 is orthogonal to central axis 2.

**EP 4 564 381 A1**

The model No. 27B1 corresponds to the coil (the coil in the ninth reference example shown in Fig. 23) in which the electric wire including the conductor having the cross-sectional shape No. 27 is helically wound around central axis 2 ten times in such a posture that reference straight line 18 is in parallel to central axis 2.

The model No. 27B2 corresponds to the coil (the coil in the tenth reference example shown in Fig. 24) in which the electric wire including the conductor having the cross-sectional shape No. 27 is helically wound around central axis 2 ten times in such a posture that first edge 14 is opposed to central axis 2 and reference straight line 18 is orthogonal to central axis 2.

The models Nos. 2B1 to 2B3 each correspond to the coil (the coil in the eleventh reference example shown in Fig. 25) in which the electric wire including the conductor having the cross-sectional shape No. 2 is helically wound around central axis 2 ten times such that reference straight lines 18a and 18b in first portion 1a and second portion 1b are inclined with respect to the normal to central axis 2 and reference straight line 18c in third portion 1c is orthogonal to central axis 2. The models Nos. 2B1 to 2B3 corresponds to the coils in which angles $\phi$ (see Fig. 25) are designed to 30°, 45°, and 60°, respectively. The number of times of winding in each of first portion 1a and second portion 1b was set to three, and the number of times of winding in third portion 1c was set to four.

The models Nos. 18B1 to 18B3, 21B1 to 21B3, 24B1 to 24B3, 27B3 to 27B5, and 30B1 to 30B3 each correspond to the coil (the coil in the seventh example shown in Fig. 19) in which the electric wire including the conductor having cross-sectional shape 11a is helically wound around central axis 2 ten times such that reference straight lines 18a and 18b in first portion 1a and second portion 1b are inclined with respect to the normal to central axis 2 and reference straight line 18c in third portion 1c is orthogonal to central axis 2. The number of times of winding in each of first portion 1a and second portion 1b was set to three, and the number of times of winding in third portion 1c was set to four.

The models Nos. 18B1 to 18B3 each correspond to coil 100B including the conductor having cross-sectional shape 11a corresponding to No. 18. The models Nos. 21B1 to 21B3 each correspond to coil 100B including the conductor having cross-sectional shape 11a corresponding to No. 21. The models Nos. 24B1 to 24B3 each correspond to coil 100B including the conductor having cross-sectional shape 11a corresponding to No. 24. The models Nos. 27B3 to 27B5 each correspond to coil 100B including the conductor having cross-sectional shape 11a corresponding to No. 27. The models Nos. 30B1 to 30B3 each correspond to coil 100B including the conductor having cross-sectional shape 11a corresponding to No. 30.

The models Nos. 18B1, 21B1, 24B1, 27B3, and 30B1 each correspond to the coil in which angle $\phi$ (see Fig. 19) is designed to 30°. The models Nos. 18B2, 21B2, 24B2, 27B4, and 30B2 each correspond to the coil in which angle $\phi$ (see Fig. 19) is designed to 45°. The models Nos. 18B3, 21B3, 24B3, 27B5, and 30B3 each correspond to the coil in which angle $\phi$ (see Fig. 19) is designed to 60°.

In each model, a pitch P1 (see Figs. 16 to 25) of wound electric wire 1 is set to 6 mm.

Tables 5 and 6 show results of simulation when each model has coil diameter d of 50 mm. Furthermore, Tables 7 and 8 show results of simulation when each model has coil diameter d of 100 mm. Tables 5 to 8 each show the quality factor at each frequency.

[Table 5]

| No. | 1 Hz | 10 Hz | 100 Hz | 1 kHz | 10 kHz | 100 kHz | 1 MHz | 10 MHz | 100 MHz |
|-----|------|-------|--------|-------|--------|---------|-------|--------|---------|
| 1B | 0.0 | 0.0 | 0.1 | 1.4 | 13.3 | 57.4 | 192.6 | 613.7 | 1659.5 |
| 2B | 0.0 | 0.0 | 0.1 | 1.4 | 12.3 | 72.1 | 233.3 | 718.1 | 1931.0 |
| 3B | 0.0 | 0.0 | 0.1 | 1.4 | 13.0 | 70.4 | 221.4 | 701.3 | 1878.9 |
| 4B | 0.0 | 0.0 | 0.1 | 1.4 | 12.8 | 68.8 | 217.9 | 671.2 | 1794.8 |
| 5B | 0.0 | 0.0 | 0.1 | 1.4 | 12.8 | 72.1 | 230.2 | 715.1 | 1876.6 |
| 6B | 0.0 | 0.0 | 0.1 | 1.4 | 12.7 | 74.0 | 237.5 | 737.6 | 1959.9 |
| 7B | 0.0 | 0.0 | 0.1 | 1.4 | 12.6 | 74.9 | 241.2 | 749.8 | 2007.1 |
| 8B | 0.0 | 0.0 | 0.1 | 1.4 | 12.5 | 74.5 | 240.6 | 746.6 | 1992.8 |
| 9B | 0.0 | 0.0 | 0.1 | 1.4 | 12.4 | 73.3 | 236.9 | 733.1 | 1959.6 |
| 10B | 0.0 | 0.0 | 0.1 | 1.4 | 12.8 | 68.8 | 217.9 | 671.2 | 1794.8 |
| 11B | 0.0 | 0.0 | 0.1 | 1.4 | 12.8 | 72.1 | 230.2 | 715.1 | 1876.6 |
| 12B | 0.0 | 0.0 | 0.1 | 1.4 | 12.8 | 76.1 | 241.1 | 752.4 | 2010.2 |
| 13B | 0.0 | 0.0 | 0.1 | 1.4 | 12.7 | 77.0 | 246.0 | 767.6 | 2078.8 |
| 14B | 0.0 | 0.0 | 0.1 | 1.4 | 12.6 | 76.2 | 244.7 | 761.0 | 2042.2 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 15B | 0.0 | 0.0 | 0.1 | 1.4 | 12.4 | 74.1 | 239.3 | 741.7 | 1971.7 |
| 16B | 0.0 | 0.0 | 0.1 | 1.4 | 12.4 | 73.0 | 236.0 | 730.1 | 1945.9 |
| 17B | 0.0 | 0.0 | 0.1 | 1.4 | 12.4 | 73.9 | 238.6 | 739.2 | 1975.2 |
| 18B | 0.0 | 0.0 | 0.1 | 1.4 | 12.5 | 74.8 | 241.2 | 748.7 | 2008.3 |
| 19B | 0.0 | 0.0 | 0.1 | 1.4 | 12.5 | 75.8 | 244.2 | 756.1 | 2014.0 |
| 20B | 0.0 | 0.0 | 0.1 | 1.4 | 12.6 | 76.6 | 246.5 | 763.8 | 2048.2 |
| 21B | 0.0 | 0.0 | 0.1 | 1.4 | 12.6 | 77.2 | 248.1 | 774.4 | 2114.1 |
| 22B | 0.0 | 0.0 | 0.1 | 1.4 | 12.6 | 77.6 | 248.9 | 778.7 | 2104.8 |
| 23B | 0.0 | 0.0 | 0.1 | 1.4 | 12.7 | 78.3 | 250.7 | 783.4 | 2092.5 |
| 24B | 0.0 | 0.0 | 0.1 | 1.4 | 12.7 | 78.7 | 251.3 | 787.4 | 2163.8 |
| 25B | 0.0 | 0.0 | 0.1 | 1.4 | 12.8 | 78.8 | 251.1 | 789.7 | 2151.1 |
| 26B | 0.0 | 0.0 | 0.1 | 1.4 | 12.8 | 78.9 | 250.5 | 785.2 | 2093.6 |
| 27B | 0.0 | 0.0 | 0.1 | 1.4 | 12.9 | 78.7 | 249.4 | 781.3 | 2141.3 |
| 28B | 0.0 | 0.0 | 0.1 | 1.4 | 12.9 | 78.4 | 247.6 | 777.6 | 2135.2 |
| 29B | 0.0 | 0.0 | 0.1 | 1.4 | 12.9 | 78.0 | 245.8 | 774.3 | 2129.8 |
| 30B | 0.0 | 0.0 | 0.1 | 1.4 | 12.9 | 77.6 | 244.1 | 767.6 | 2091.1 |
| 31B | 0.0 | 0.0 | 0.1 | 1.4 | 13.0 | 77.2 | 242.3 | 762.1 | 2056.3 |
| 32B | 0.0 | 0.0 | 0.1 | 1.4 | 13.0 | 76.7 | 240.5 | 756.2 | 2038.5 |
| 33B | 0.0 | 0.0 | 0.1 | 1.4 | 13.0 | 76.1 | 238.4 | 753.6 | 2082.4 |
| 34B | 0.0 | 0.0 | 0.1 | 1.4 | 13.0 | 75.3 | 235.7 | 746.3 | 2054.8 |
| 35B | 0.0 | 0.0 | 0.1 | 1.4 | 13.0 | 74.5 | 233.0 | 736.5 | 2006.1 |
| 36B | 0.0 | 0.0 | 0.1 | 1.4 | 13.0 | 73.6 | 230.2 | 726.1 | 1955.4 |
| 37B | 0.0 | 0.0 | 0.1 | 1.4 | 13.0 | 72.6 | 227.3 | 718.1 | 1924.8 |
| 38B | 0.0 | 0.0 | 0.1 | 1.4 | 13.0 | 71.7 | 224.5 | 710.3 | 1911.8 |
| 27B1 | 0.0 | 0.0 | 0.1 | 1.3 | 11.2 | 60.4 | 198.5 | 617.4 | 1671.5 |
| 27B2 | 0.0 | 0.0 | 0.1 | 1.4 | 11.6 | 56.7 | 190.6 | 586.1 | 1572.4 |

[Table 6]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 2B1 | 0.0 | 0.0 | 0.1 | 1.4 | 13.0 | 79.4 | 255.3 | 791.5 | 2123.1 |
| 2B2 | 0.0 | 0.0 | 0.1 | 1.4 | 12.8 | 75.4 | 244.5 | 757.7 | 2029.4 |
| 2B3 | 0.0 | 0.0 | 0.1 | 1.4 | 12.4 | 70.1 | 229.9 | 712.1 | 1901.4 |
| 18B1 | 0.0 | 0.0 | 0.1 | 1.4 | 13.2 | 84.1 | 267.6 | 838.0 | 2262.2 |
| 18B2 | 0.0 | 0.0 | 0.1 | 1.4 | 13.1 | 81.1 | 259.1 | 810.4 | 2176.7 |
| 18B3 | 0.0 | 0.0 | 0.1 | 1.4 | 12.7 | 75.9 | 244.8 | 764.6 | 2048.2 |
| 21B1 | 0.0 | 0.0 | 0.1 | 1.4 | 13.3 | 85.7 | 270.6 | 852.0 | 2356.3 |
| 21B2 | 0.0 | 0.0 | 0.1 | 1.4 | 13.2 | 84.7 | 267.4 | 841.6 | 2318.5 |
| 21B3 | 0.0 | 0.0 | 0.1 | 1.4 | 12.9 | 80.4 | 255.5 | 802.8 | 2203.6 |
| 24B1 | 0.0 | 0.0 | 0.1 | 1.4 | 13.3 | 84.9 | 266.8 | 838.7 | 2303.7 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 24B2 | 0.0 | 0.0 | 0.1 | 1.4 | 13.3 | 85.3 | 267.2 | 840.7 | 2308.1 |
| 24B3 | 0.0 | 0.0 | 0.1 | 1.4 | 13.1 | 82.8 | 260.6 | 819.6 | 2252.7 |
| 27B3 | 0.0 | 0.0 | 0.1 | 1.4 | 13.3 | 83.0 | 259.7 | 815.5 | 2241.8 |
| 27B4 | 0.0 | 0.0 | 0.1 | 1.4 | 13.4 | 83.7 | 261.3 | 820.8 | 2253.1 |
| 27B5 | 0.0 | 0.0 | 0.1 | 1.4 | 13.2 | 82.8 | 258.9 | 814.3 | 2236.4 |
| 30B1 | 0.0 | 0.0 | 0.1 | 1.4 | 13.3 | 80.3 | 250.7 | 788.9 | 2152.3 |
| 30B2 | 0.0 | 0.0 | 0.1 | 1.4 | 13.3 | 81.0 | 252.4 | 795.0 | 2169.0 |
| 30B3 | 0.0 | 0.0 | 0.1 | 1.4 | 13.2 | 80.8 | 252.1 | 794.5 | 2166.8 |

[Table 7]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 1B | 0.0 | 0.0 | 0.2 | 2.2 | 20.9 | 91.6 | 309.5 | 987.9 | 2673.2 |
| 2B | 0.0 | 0.0 | 0.2 | 2.2 | 18.5 | 103.3 | 337.3 | 1033.0 | 2779.9 |
| 3B | 0.0 | 0.0 | 0.2 | 2.2 | 20.6 | 114.3 | 360.7 | 1144.8 | 3074.4 |
| 4B | 0.0 | 0.0 | 0.2 | 2.2 | 19.7 | 106.7 | 345.5 | 1072.0 | 2878.7 |
| 5B | 0.0 | 0.0 | 0.2 | 2.2 | 19.5 | 109.4 | 356.0 | 1108.4 | 2930.1 |
| 6B | 0.0 | 0.0 | 0.2 | 2.2 | 19.2 | 110.1 | 359.4 | 1116.9 | 2971.8 |
| 7B | 0.0 | 0.0 | 0.2 | 2.2 | 19.0 | 109.1 | 356.8 | 1105.1 | 2942.3 |
| 8B | 0.0 | 0.0 | 0.2 | 2.2 | 18.8 | 107.2 | 350.5 | 1081.7 | 2870.1 |
| 9B | 0.0 | 0.0 | 0.2 | 2.2 | 18.6 | 105.1 | 343.0 | 1055.8 | 2802.9 |
| 10B | 0.0 | 0.0 | 0.2 | 2.2 | 20.3 | 109.4 | 348.4 | 1083.8 | 2950.2 |
| 11B | 0.0 | 0.0 | 0.2 | 2.2 | 20.0 | 113.7 | 363.6 | 1135.4 | 2998.7 |
| 12B | 0.0 | 0.0 | 0.2 | 2.2 | 19.6 | 115.0 | 370.5 | 1156.6 | 3086.2 |
| 13B | 0.0 | 0.0 | 0.2 | 2.2 | 19.2 | 113.6 | 368.8 | 1148.8 | 3094.5 |
| 14B | 0.0 | 0.0 | 0.2 | 2.2 | 18.9 | 110.3 | 359.4 | 1114.5 | 2984.7 |
| 15B | 0.0 | 0.0 | 0.2 | 2.2 | 18.6 | 106.4 | 346.9 | 1069.2 | 2832.1 |
| 16B | 0.0 | 0.0 | 0.2 | 2.2 | 18.5 | 104.4 | 340.8 | 1048.6 | 2781.0 |
| 17B | 0.0 | 0.0 | 0.2 | 2.2 | 18.6 | 105.7 | 344.9 | 1062.3 | 2820.4 |
| 18B | 0.0 | 0.0 | 0.2 | 2.2 | 18.7 | 107.2 | 349.7 | 1079.3 | 2885.2 |
| 19B | 0.0 | 0.0 | 0.2 | 2.2 | 18.8 | 108.8 | 355.0 | 1093.6 | 2906.3 |
| 20B | 0.0 | 0.0 | 0.2 | 2.2 | 18.9 | 110.5 | 360.6 | 1113.6 | 2992.7 |
| 21B | 0.0 | 0.0 | 0.2 | 2.2 | 19.0 | 112.2 | 365.9 | 1138.1 | 3097.1 |
| 22B | 0.0 | 0.0 | 0.2 | 2.2 | 19.1 | 113.9 | 370.8 | 1155.8 | 3112.7 |
| 23B | 0.0 | 0.0 | 0.2 | 2.2 | 19.2 | 115.4 | 375.1 | 1167.1 | 3128.4 |
| 24B | 0.0 | 0.0 | 0.2 | 2.2 | 19.3 | 116.7 | 378.6 | 1181.2 | 3228.5 |
| 25B | 0.0 | 0.0 | 0.2 | 2.2 | 19.5 | 117.9 | 381.5 | 1197.2 | 3250.8 |
| 26B | 0.0 | 0.0 | 0.2 | 2.2 | 19.6 | 118.9 | 383.5 | 1200.3 | 3207.4 |
| 27B | 0.0 | 0.0 | 0.2 | 2.2 | 19.7 | 119.6 | 384.8 | 1204.1 | 3298.6 |
| 28B | 0.0 | 0.0 | 0.2 | 2.2 | 19.8 | 120.2 | 385.4 | 1209.3 | 3310.5 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 29B | 0.0 | 0.0 | 0.2 | 2.2 | 20.0 | 120.5 | 385.4 | 1213.2 | 3330.6 |
| 30B | 0.0 | 0.0 | 0.2 | 2.2 | 20.1 | 120.7 | 384.9 | 1209.9 | 3301.3 |
| 31B | 0.0 | 0.0 | 0.2 | 2.2 | 20.2 | 120.7 | 383.8 | 1207.4 | 3245.1 |
| 32B | 0.0 | 0.0 | 0.2 | 2.2 | 20.3 | 120.5 | 382.4 | 1203.8 | 3241.5 |
| 33B | 0.0 | 0.0 | 0.2 | 2.2 | 20.4 | 120.2 | 380.5 | 1202.6 | 3311.7 |
| 34B | 0.0 | 0.0 | 0.2 | 2.2 | 20.5 | 119.7 | 378.2 | 1197.5 | 3293.6 |
| 35B | 0.0 | 0.0 | 0.2 | 2.2 | 20.6 | 119.1 | 375.6 | 1189.1 | 3251.2 |
| 36B | 0.0 | 0.0 | 0.2 | 2.2 | 20.6 | 118.3 | 372.5 | 1176.5 | 3169.4 |
| 37B | 0.0 | 0.0 | 0.2 | 2.2 | 20.6 | 117.2 | 368.8 | 1166.5 | 3126.9 |
| 38B | 0.0 | 0.0 | 0.2 | 2.2 | 20.7 | 116.0 | 365.0 | 1156.0 | 3119.4 |
| 27B1 | 0.0 | 0.0 | 0.2 | 2.1 | 18.8 | 102.1 | 337.5 | 1054.9 | 2876.6 |
| 27B2 | 0.0 | 0.0 | 0.2 | 2.2 | 18.3 | 94.7 | 318.4 | 986.3 | 2674.7 |

[Table 8]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 2B1 | 0.0 | 0.0 | 0.2 | 2.2 | 20.0 | 121.8 | 398.1 | 1238.0 | 3336.5 |
| 2B2 | 0.0 | 0.0 | 0.2 | 2.2 | 20.2 | 121.4 | 398.0 | 1238.8 | 3376.8 |
| 2B3 | 0.0 | 0.0 | 0.2 | 2.2 | 20.1 | 117.3 | 386.8 | 1205.2 | 3247.6 |
| 18B1 | 0.0 | 0.0 | 0.2 | 2.2 | 20.3 | 127.3 | 411.5 | 1287.5 | 3472.2 |
| 18B2 | 0.0 | 0.0 | 0.2 | 2.2 | 20.6 | 129.4 | 417.7 | 1309.4 | 3535.3 |
| 18B3 | 0.0 | 0.0 | 0.2 | 2.2 | 20.5 | 126.2 | 409.3 | 1283.5 | 3456.6 |
| 21B1 | 0.0 | 0.0 | 0.2 | 2.2 | 20.5 | 129.5 | 415.3 | 1303.8 | 3584.3 |
| 21B2 | 0.0 | 0.0 | 0.2 | 2.2 | 20.9 | 134.0 | 427.3 | 1344.8 | 3703.9 |
| 21B3 | 0.0 | 0.0 | 0.2 | 2.2 | 20.9 | 132.8 | 424.0 | 1334.8 | 3672.7 |
| 24B1 | 0.0 | 0.0 | 0.2 | 2.2 | 20.6 | 129.5 | 412.5 | 1292.8 | 3537.2 |
| 24B2 | 0.0 | 0.0 | 0.2 | 2.2 | 21.1 | 134.6 | 425.9 | 1339.1 | 3679.5 |
| 24B3 | 0.0 | 0.0 | 0.2 | 2.2 | 21.1 | 135.6 | 428.3 | 1347.3 | 3699.5 |
| 27B3 | 0.0 | 0.0 | 0.2 | 2.2 | 20.7 | 128.4 | 406.7 | 1275.5 | 3500.2 |
| 27B4 | 0.0 | 0.0 | 0.2 | 2.2 | 21.1 | 132.6 | 417.6 | 1311.6 | 3602.7 |
| 27B5 | 0.0 | 0.0 | 0.2 | 2.2 | 21.2 | 134.4 | 422.3 | 1328.7 | 3657.0 |
| 30B1 | 0.0 | 0.0 | 0.2 | 2.2 | 20.8 | 126.6 | 398.9 | 1255.5 | 3426.2 |
| 30B2 | 0.0 | 0.0 | 0.2 | 2.2 | 21.1 | 129.2 | 405.7 | 1277.6 | 3487.8 |
| 30B3 | 0.0 | 0.0 | 0.2 | 2.2 | 21.2 | 130.6 | 409.6 | 1291.1 | 3524.0 |

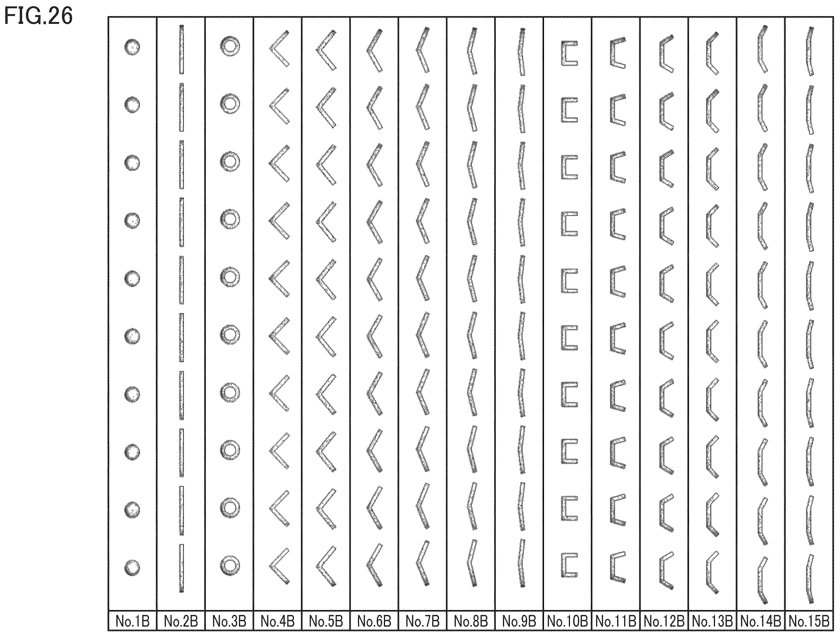

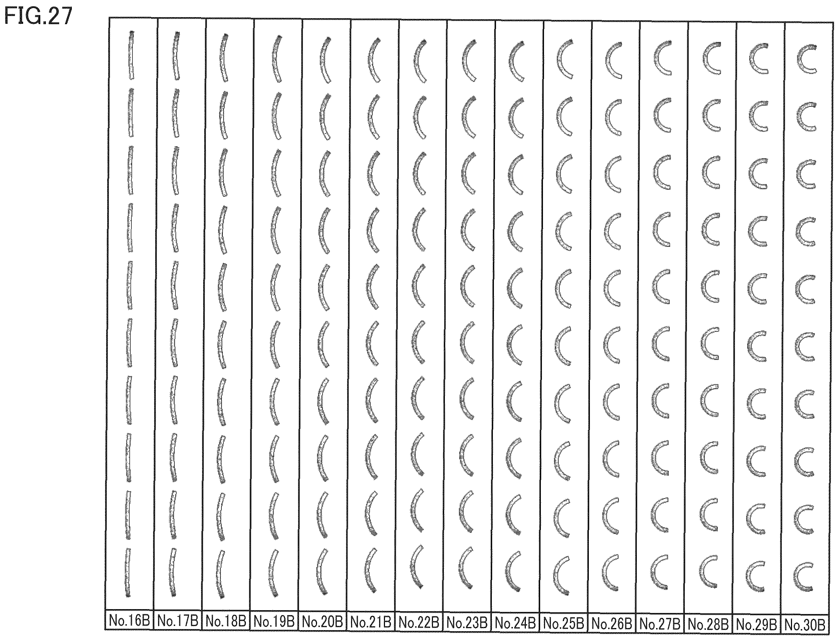

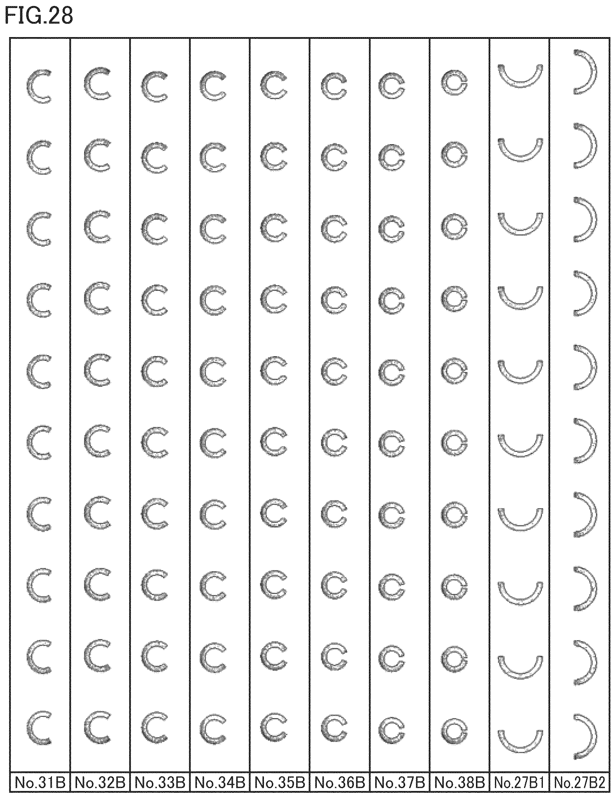

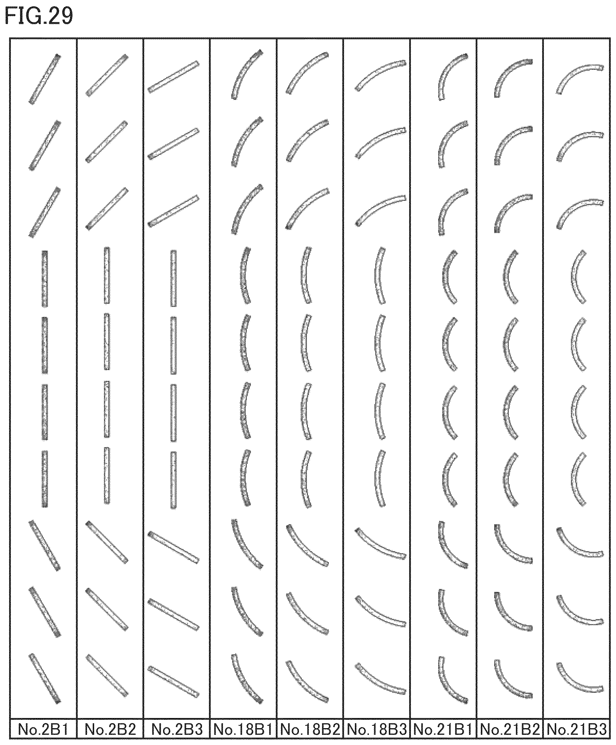

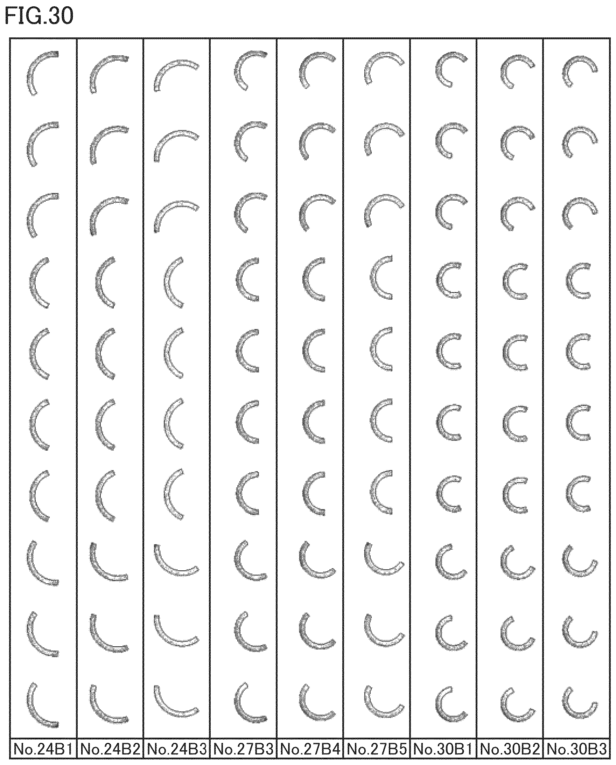

Fig. 26 is a diagram showing a distribution of a current in the cross-sections of the conductors corresponding to the models Nos. 1B to 15B when the frequency is set to 100 kHz. Fig. 27 is a diagram showing a distribution of a current in the cross-sections of the conductors corresponding to the models Nos. 16B to 30B when the frequency is set to 100 kHz. Fig. 28 is a diagram showing a distribution of a current in the cross-sections of the conductors corresponding to the models Nos. 31B to 38B, 27B1, and 27B2 when the frequency is set to 100 kHz. Fig. 29 is a diagram showing a distribution of a current in the cross-sections of the conductors corresponding to the models Nos. 2B1 to 2B3, 18B1 to 18B3, and 21B1 to 21B3 when the frequency is set to 100 kHz. Fig. 30 is a diagram showing a distribution of a current in the cross-sections of the conductors corresponding to the models Nos. 24B1 to 24B3, 27B3 to 27B5, and 30B1 to 30B3 when the frequency is set to 100 kHz. Figs. 26 to 30 each show the distribution of the current when each model has coil diameter d of 50 mm. Figs. 26 to 30 each show the distribution of the current in the cross-section of the conductor where central axis 2 is present on the left side.

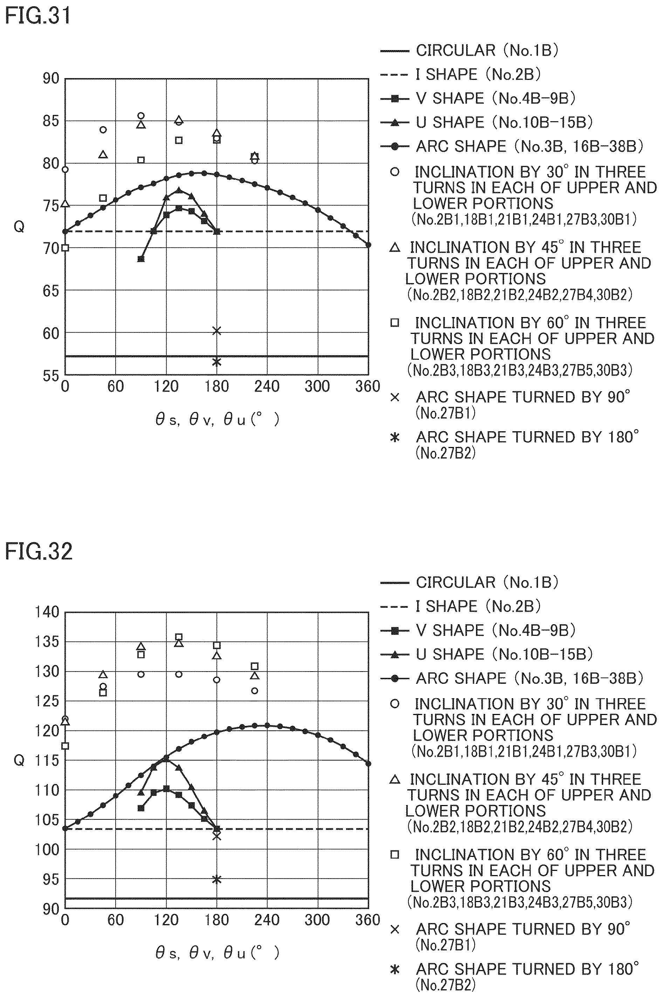

Fig. 31 shows a graph of the quality factor of each model in the second embodiment when coil diameter d is set to 50 mm and the frequency is set to 100 kHz. Fig. 32 shows a graph of the quality factor of each model in the second embodiment when coil diameter d is set to 100 mm and the frequency is set to 100 kHz. In Figs. 31 and 32, the abscissa represents central angle θs or angle θv or θu, and the ordinate represents the quality factor. In Figs. 31 and 32, a point at θs = 360° indicates a value obtained from the model corresponding to the coil in the eighth reference example. A point at θs = 0° and a point at θv or θu = 180° each indicate a value obtained from the model corresponding to the coil in the seventh reference example or the eleventh reference example.

The models Nos. 4B to 38B corresponding to the coils in the fourth to sixth examples are found to be larger in quality factor than the model No. 1B corresponding to the sixth reference example where the conductor has the circular cross-sectional shape, as in the first embodiment.

Tendency that the models Nos. 16B to 38B each corresponding to the coil (in the arc shape) in the fourth example is larger in quality factor than the models Nos. 4B to 15B corresponding to the coils (in the V shape and the U shape) in the fifth example and the sixth example is observed.

The models Nos. 27B, 27B1, and 27B2 each correspond to the coil including the conductor in the arc shape having θs = 180°. The model No. 27B corresponding to the coil in the fourth example, however, is found to be larger in quality factor than the models Nos. 27B1 and 27B2 corresponding to the coils in the respective ninth and tenth reference examples.

It is found from the results of simulation of the model corresponding to the coil including the conductor in the arc shape that the quality factor is dependent on central angle θs. Specifically, in the example where coil diameter d is 50 mm, the quality factor becomes large when central angle θs is from 15° to 330°, the quality factor becomes larger when central angle θs is from 60° to 285°, the quality factor becomes further larger when central angle θs is from 90° to 240°, and the quality factor becomes particularly large when central angle θs is from 105° to 240°. In the example where coil diameter d is 100 mm, the quality factor becomes large when central angle θs is from 60° to 345°, the quality factor becomes larger when central angle θs is from 120° to 345°, and the quality factor becomes further larger when central angle θs is from 180° to 300°.

The quality factor is found to noticeably become large by inclination of reference straight lines 18a and 18b in first portion 1a and second portion 1b of electric wire 1 wound around first section 3a and second section 3b located on sides of opposing ends of target section 3 of central axis 2. As shown in Figs. 27 and 28, in the conductor in first portion 1a at an upper end, the current tends to concentrate on an upper side. In the conductor in second portion 1b at a lower end, on the other hand, the current tends to concentrate on a lower side. Therefore, as shown in Figs. 29 and 30, owing to inclination of the posture of the conductor in a direction in which the current tends to concentrate, uneven distribution of the current in the conductor is suppressed.

It is found from the results of simulation of the model corresponding to the coil including the conductor in the V shape that the quality factor is dependent on angle θv. In the example where coil diameter d is 50 mm, the quality factor becomes large when angle θv is from 120° to 165°. In the example where coil diameter d is 100 mm, the quality factor becomes large when angle θv is from 90° to 165°, the quality factor becomes larger when angle θv is from 90° to 150°, and the quality factor becomes further larger when angle θv is from 105° to 135°.

It is found from the results of simulation of the model corresponding to the coil including the conductor in the U shape that the quality factor is dependent on angle θu. In the example where coil diameter d is 50 mm, the quality factor becomes large when angle θu is from 105° to 165°, the quality factor becomes larger when angle θu is from 120° to 165°, and the quality factor becomes further larger when angle θu is from 120° to 150°. In the example where coil diameter d is 100 mm, the quality factor becomes large when angle θu is from 90° to 165°, the quality factor becomes larger when angle θu is from 90° to 150°, and the quality factor becomes further larger when angle θu is from 105° to 135°.

<Third Embodiment>

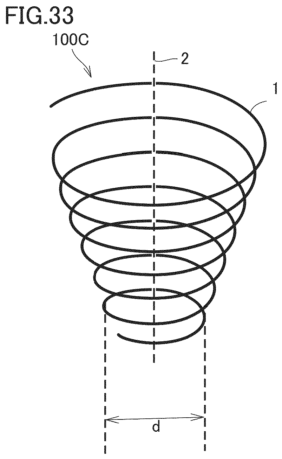

Fig. 33 is a perspective view of an appearance of a coil according to a third embodiment. As shown in Fig. 33, a coil 100C according to the third embodiment is different from coil 100B according to the second embodiment in that a distance between central axis 2 and electric wire 1 increases or decreases along central axis 2. In the example shown in Fig. 33, the distance between central axis 2 and electric wire 1 increases in a direction upward along central axis 2. As shown in Fig. 33, coil diameter d is defined by a diameter of a portion of electric wire 1 wound closest to central axis 2.

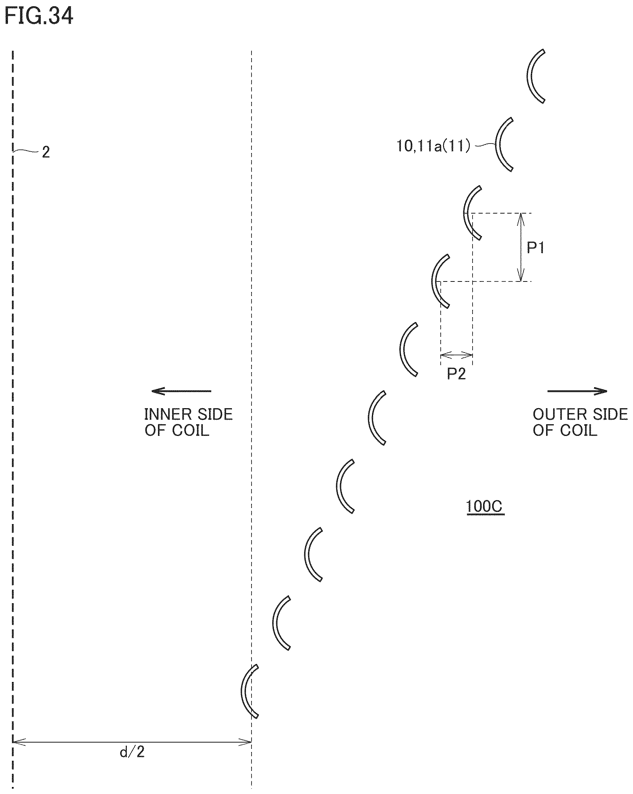

Fig. 34 is a cross-sectional view showing a coil in an eighth example. Coil 100C in the eighth example is obtained by application of the construction in the third embodiment to coil 100B in the fourth example shown in Fig. 16. Specifically, as shown in Fig. 34, coil 100C in the eighth example is different from coil 100B in the fourth example only in increase in distance between central axis 2 and electric wire 1 by a pitch P2 in helical winding once of electric wire 1 along central axis 2.

Similarly, coils (not shown) in ninth to eleventh examples are obtained by application of the construction in the third embodiment to coils 100B in the fifth to seventh examples shown in Figs. 17 to 19, respectively. Specifically, coil 100C in the ninth example is different from coil 100B (see Fig. 17) in the fifth example only in increase in distance between central axis 2 and electric wire 1 by pitch P2 in helical winding once of electric wire 1 along central axis 2. Coil 100C in the tenth example is different from coil 100B (see Fig. 18) in the sixth example only in increase in distance between central axis 2 and electric wire 1 by pitch P2 in helical winding once of electric wire 1 along central axis 2. Coil 100C in the eleventh example is different from coil 100B (see Fig. 19) in the seventh example only in increase in distance between central axis 2 and electric wire 1 by pitch P2 in helical winding once of electric wire 1 along central axis 2.

(Simulation)

Models of the plurality of coils different in cross-sectional shape of the conductor were evaluated in accordance with the method the same as in the second embodiment.

The models to be evaluated include models corresponding to the coils (not shown) in twelfth to seventeenth reference examples, in addition to the models corresponding to coils 100C in the eighth to eleventh examples. The coils in the twelfth to seventeenth reference examples are obtained by application of the construction in the third embodiment to the coils in the sixth to eleventh reference examples shown in Figs. 20 to 25, respectively. Specifically, the coils in the twelfth to seventeenth reference examples are different from the coils in the sixth to eleventh reference examples in that the distance between central axis 2 and electric wire 1 increases by pitch P2 in helical winding once of electric wire 1 along central axis 2.

The models to be evaluated include models Nos. 1C to 38C, 2C1 to 2C3, 18C1 to 18C3, 21C1 to 21C3, 25C1 to 25C3, 27C1 to 27C5, and 29C1 to 29C3. The models Nos. 1C to 38C, 2C1 to 2C3, 18C1 to 18C3, 21C1 to 21C3, 25C1 to 25C3, 27C1 to 27C5, and 29C1 to 29C3 are different from the models Nos. 1B to 38B, 2B1 to 2B3, 18B1 to 18B3, 21B1 to 21B3, 25B1 to 25B3, 27B1 to 27B5, and 29B1 to 29B3 only in increase in distance between central axis 2 and electric wire 1 by pitch P2 in helical winding once of electric wire 1 along central axis 2.

Specifically, the model No. 1C corresponds to the coil in the twelfth reference example including the conductor having the cross-sectional shape No. 1 shown in Table 2. The model No. 2C corresponds to the coil in the thirteenth reference example including the conductor having the cross-sectional shape No. 2. The model No. 3C corresponds to the coil in the fourteenth reference example including the conductor having the cross-sectional shape No. 3. The models Nos. 4C to 9C correspond to coils 100C in the ninth example including the conductors having the cross-sectional shapes Nos. 4 to 9, respectively. The models Nos. 10C to 15C correspond to coils 100C in the tenth example including the conductors having the cross-sectional shapes Nos. 10 to 15, respectively. The models Nos. 16C to 38C correspond to coils 100C in the eighth example including the conductors having the cross-sectional shapes Nos. 16 to 38, respectively. The model No. 27C1 corresponds to the coil in the fifteenth reference example including the conductor having the cross-sectional shape No. 27. The model No. 27C2 corresponds to the coil in the sixteenth reference example including the conductor having the cross-sectional shape No. 27.

The models Nos. 2C1 to 2C3 each correspond to the coil in the seventeenth reference example including the conductor having the cross-sectional shape No. 2, and in the models, angles $\phi$ formed between reference straight line 18a or 18b and the normal to central axis 2 are designed to 30°, 45°, and 60°, respectively. The models Nos. 18C1 to 18C3 each correspond to coil 100C in the eleventh example including the conductor having the cross-sectional shape No. 18, and in the models, angles $\phi$ formed between reference straight line 18a or 18b and the normal to central axis 2 are designed to 30°, 45°, and 60°, respectively. The models Nos. 21C1 to 21C3 each correspond to coil 100C in the eleventh example including the conductor having the cross-sectional shape No. 21, and in the models, angles $\phi$ formed between reference straight line 18a or 18b and the normal to central axis 2 are designed to 30°, 45°, and 60°, respectively. The models Nos. 24C1 to 24C3 correspond to coil 100C in the eleventh example including the conductor having the cross-sectional shape No. 24, and in the models, angles $\phi$ formed between reference straight line 18a or 18b and the normal to central axis 2 are designed to 30°, 45°, and 60°, respectively. The models Nos. 27C3 to 27C5 correspond to coil 100C in the eleventh example including the conductor having the cross-sectional shape No. 27, and in the models, angles $\phi$ formed between reference straight line 18a or 18b and the normal to central axis 2 are designed to 30°, 45°, and 60°, respectively. The models Nos. 30C1 to 30C3 correspond to coil 100C in the eleventh example including the conductor having the cross-sectional shape No. 30, and in the models, angles $\phi$ formed between reference straight line 18a or 18b and the normal to central axis 2 are designed to 30°, 45°, and 60°, respectively.

In each model, pitch P1 (see Fig. 34) of wound electric wire 1 is set to 6 mm and pitch P2 is set to 3 mm.

Tables 9 and 10 show results of simulation when each model has coil diameter d of 50 mm. Furthermore, Tables 11 and 12 show results of simulation when each model has coil diameter d of 100 mm. Tables 9 to 12 each show the quality factor at each frequency.

[Table 9]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 1C | 0.0 | 0.0 | 0.2 | 1.8 | 17.1 | 74.2 | 250.2 | 797.9 | 2158.2 |
| 2C | 0.0 | 0.0 | 0.2 | 1.7 | 15.7 | 89.9 | 294.1 | 912.0 | 2463.0 |
| 3C | 0.0 | 0.0 | 0.2 | 1.8 | 16.7 | 92.0 | 289.6 | 918.0 | 2462.8 |
| 4C | 0.0 | 0.0 | 0.2 | 1.8 | 16.4 | 88.1 | 281.9 | 874.3 | 2350.8 |
| 5C | 0.0 | 0.0 | 0.2 | 1.8 | 16.3 | 91.3 | 293.4 | 915.0 | 2418.5 |
| 6C | 0.0 | 0.0 | 0.2 | 1.8 | 16.2 | 93.3 | 300.6 | 937.4 | 2499.8 |
| 7C | 0.0 | 0.0 | 0.2 | 1.7 | 16.1 | 94.0 | 303.7 | 947.4 | 2537.2 |
| 8C | 0.0 | 0.0 | 0.2 | 1.7 | 16.0 | 93.4 | 302.8 | 943.9 | 2518.7 |
| 9C | 0.0 | 0.0 | 0.2 | 1.7 | 15.8 | 92.0 | 299.2 | 931.9 | 2488.6 |
| 10C | 0.0 | 0.0 | 0.2 | 1.8 | 16.8 | 88.4 | 279.4 | 867.6 | 2366.3 |
| 11C | 0.0 | 0.0 | 0.2 | 1.8 | 16.6 | 92.7 | 293.8 | 916.8 | 2423.5 |
| 12C | 0.0 | 0.0 | 0.2 | 1.8 | 16.4 | 95.2 | 303.3 | 947.8 | 2533.5 |
| 13C | 0.0 | 0.0 | 0.2 | 1.8 | 16.2 | 96.0 | 307.5 | 961.7 | 2600.6 |
| 14C | 0.0 | 0.0 | 0.2 | 1.7 | 16.1 | 95.4 | 307.4 | 960.1 | 2574.4 |
| 15C | 0.0 | 0.0 | 0.2 | 1.7 | 15.9 | 93.3 | 302.4 | 942.9 | 2507.7 |
| 16C | 0.0 | 0.0 | 0.2 | 1.7 | 15.8 | 91.4 | 297.6 | 927.3 | 2473.6 |
| 17C | 0.0 | 0.0 | 0.2 | 1.7 | 15.9 | 92.8 | 301.6 | 940.4 | 2511.4 |
| 18C | 0.0 | 0.0 | 0.2 | 1.7 | 15.9 | 94.0 | 304.3 | 949.4 | 2549.5 |
| 19C | 0.0 | 0.0 | 0.2 | 1.7 | 16.0 | 95.2 | 307.7 | 957.5 | 2557.6 |
| 20C | 0.0 | 0.0 | 0.2 | 1.7 | 16.1 | 96.0 | 309.6 | 963.8 | 2596.6 |
| 21C | 0.0 | 0.0 | 0.2 | 1.7 | 16.1 | 96.8 | 311.6 | 976.1 | 2669.6 |
| 22C | 0.0 | 0.0 | 0.2 | 1.7 | 16.2 | 97.5 | 313.2 | 981.9 | 2658.1 |
| 23C | 0.0 | 0.0 | 0.2 | 1.7 | 16.3 | 97.9 | 314.1 | 982.1 | 2636.7 |
| 24C | 0.0 | 0.0 | 0.2 | 1.8 | 16.3 | 98.3 | 314.5 | 984.8 | 2707.6 |
| 25C | 0.0 | 0.0 | 0.2 | 1.8 | 16.4 | 98.6 | 314.7 | 989.3 | 2691.0 |
| 26C | 0.0 | 0.0 | 0.2 | 1.8 | 16.4 | 98.7 | 314.7 | 986.2 | 2638.8 |
| 27C | 0.0 | 0.0 | 0.2 | 1.8 | 16.5 | 98.8 | 314.4 | 985.0 | 2702.4 |
| 28C | 0.0 | 0.0 | 0.2 | 1.8 | 16.5 | 98.9 | 313.9 | 985.9 | 2704.4 |
| 29C | 0.0 | 0.0 | 0.2 | 1.8 | 16.6 | 98.8 | 313.0 | 985.4 | 2707.1 |
| 30C | 0.0 | 0.0 | 0.2 | 1.8 | 16.6 | 98.6 | 312.0 | 980.5 | 2675.3 |
| 31C | 0.0 | 0.0 | 0.2 | 1.8 | 16.7 | 98.4 | 310.7 | 976.5 | 2628.0 |
| 32C | 0.0 | 0.0 | 0.2 | 1.8 | 16.7 | 98.0 | 309.0 | 972.1 | 2621.7 |
| 33C | 0.0 | 0.0 | 0.2 | 1.8 | 16.7 | 97.4 | 306.7 | 969.0 | 2668.3 |
| 34C | 0.0 | 0.0 | 0.2 | 1.8 | 16.8 | 97.0 | 305.0 | 965.6 | 2659.1 |
| 35C | 0.0 | 0.0 | 0.2 | 1.8 | 16.8 | 96.3 | 302.4 | 956.6 | 2609.1 |
| 36C | 0.0 | 0.0 | 0.2 | 1.8 | 16.8 | 95.5 | 299.6 | 945.6 | 2547.5 |
| 37C | 0.0 | 0.0 | 0.2 | 1.8 | 16.8 | 94.5 | 296.4 | 937.1 | 2512.0 |
| 38C | 0.0 | 0.0 | 0.2 | 1.8 | 16.8 | 93.4 | 293.1 | 927.8 | 2501.9 |
| 27C1 | 0.0 | 0.0 | 0.2 | 1.7 | 14.7 | 79.6 | 262.3 | 817.4 | 2222.0 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 27C2 | 0.0 | 0.0 | 0.2 | 1.8 | 15.0 | 74.1 | 249.8 | 772.5 | 2089.0 |

[Table 10]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 2C1 | 0.0 | 0.0 | 0.2 | 1.7 | 16.2 | 95.6 | 312.5 | 972.3 | 2614.6 |
| 2C2 | 0.0 | 0.0 | 0.2 | 1.7 | 16.1 | 93.5 | 306.4 | 952.9 | 2587.0 |
| 2C3 | 0.0 | 0.0 | 0.2 | 1.7 | 15.8 | 89.2 | 293.4 | 912.5 | 2452.1 |
| 18C1 | 0.0 | 0.0 | 0.2 | 1.7 | 16.5 | 101.7 | 328.3 | 1027.7 | 2769.3 |
| 18C2 | 0.0 | 0.0 | 0.2 | 1.7 | 16.4 | 99.8 | 322.5 | 1009.5 | 2717.6 |
| 18C3 | 0.0 | 0.0 | 0.2 | 1.7 | 16.1 | 95.3 | 309.2 | 966.5 | 2593.9 |
| 21C1 | 0.0 | 0.0 | 0.2 | 1.8 | 16.8 | 105.3 | 336.3 | 1057.6 | 2908.4 |
| 21C2 | 0.0 | 0.0 | 0.2 | 1.7 | 16.7 | 104.2 | 333.1 | 1047.7 | 2877.4 |
| 21C3 | 0.0 | 0.0 | 0.2 | 1.7 | 16.4 | 100.2 | 321.4 | 1009.2 | 2759.3 |
| 24C1 | 0.0 | 0.0 | 0.2 | 1.8 | 16.9 | 106.1 | 336.1 | 1055.1 | 2892.8 |
| 24C2 | 0.0 | 0.0 | 0.2 | 1.7 | 16.9 | 105.9 | 335.5 | 1054.0 | 2891.4 |
| 24C3 | 0.0 | 0.0 | 0.2 | 1.7 | 16.6 | 103.0 | 327.2 | 1027.3 | 2820.0 |
| 27C3 | 0.0 | 0.0 | 0.2 | 1.8 | 17.0 | 104.7 | 330.0 | 1036.1 | 2846.0 |
| 27C4 | 0.0 | 0.0 | 0.2 | 1.8 | 17.0 | 105.2 | 331.3 | 1040.3 | 2855.5 |
| 27C5 | 0.0 | 0.0 | 0.2 | 1.8 | 16.8 | 103.5 | 326.5 | 1025.5 | 2815.5 |
| 30C1 | 0.0 | 0.0 | 0.2 | 1.8 | 17.0 | 102.3 | 321.2 | 1010.9 | 2758.1 |
| 30C2 | 0.0 | 0.0 | 0.2 | 1.8 | 17.0 | 103.0 | 323.2 | 1017.7 | 2777.6 |
| 30C3 | 0.0 | 0.0 | 0.2 | 1.8 | 16.9 | 102.3 | 321.3 | 1011.8 | 2761.5 |

[Table 11]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 1C | 0.0 | 0.0 | 0.2 | 2.4 | 22.9 | 101.3 | 343.1 | 1095.9 | 2965.6 |
| 2C | 0.0 | 0.0 | 0.2 | 2.4 | 20.8 | 120.7 | 402.1 | 1249.9 | 3389.7 |
| 3C | 0.0 | 0.0 | 0.2 | 2.4 | 22.7 | 127.4 | 402.8 | 1279.3 | 3436.6 |
| 4C | 0.0 | 0.0 | 0.2 | 2.4 | 21.9 | 119.9 | 390.4 | 1215.5 | 3265.9 |
| 5C | 0.0 | 0.0 | 0.2 | 2.4 | 21.7 | 123.3 | 403.4 | 1260.8 | 3337.6 |
| 6C | 0.0 | 0.0 | 0.2 | 2.4 | 21.5 | 125.0 | 410.6 | 1282.9 | 3423.4 |
| 7C | 0.0 | 0.0 | 0.2 | 2.4 | 21.4 | 125.3 | 413.3 | 1290.6 | 3444.7 |
| 8C | 0.0 | 0.0 | 0.2 | 2.4 | 21.2 | 124.6 | 412.2 | 1287.0 | 3432.3 |
| 9C | 0.0 | 0.0 | 0.2 | 2.4 | 21.0 | 122.9 | 408.2 | 1273.4 | 3396.4 |
| 10C | 0.0 | 0.0 | 0.2 | 2.4 | 22.4 | 120.7 | 386.0 | 1202.4 | 3279.8 |
| 11C | 0.0 | 0.0 | 0.2 | 2.4 | 22.1 | 125.6 | 403.8 | 1262.9 | 3342.8 |
| 12C | 0.0 | 0.0 | 0.2 | 2.4 | 21.9 | 128.1 | 414.7 | 1298.2 | 3469.4 |
| 13C | 0.0 | 0.0 | 0.2 | 2.4 | 21.6 | 128.4 | 419.0 | 1312.3 | 3545.1 |
| 14C | 0.0 | 0.0 | 0.2 | 2.4 | 21.3 | 127.0 | 417.7 | 1306.7 | 3503.1 |
| 15C | 0.0 | 0.0 | 0.2 | 2.4 | 21.0 | 124.3 | 411.6 | 1285.2 | 3418.7 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 16C | 0.0 | 0.0 | 0.2 | 2.4 | 20.9 | 122.3 | 406.6 | 1268.8 | 3380.5 |
| 17C | 0.0 | 0.0 | 0.2 | 2.4 | 21.0 | 123.8 | 410.7 | 1282.9 | 3421.7 |
| 18C | 0.0 | 0.0 | 0.2 | 2.4 | 21.1 | 125.3 | 414.4 | 1295.4 | 3475.4 |
| 19C | 0.0 | 0.0 | 0.2 | 2.4 | 21.2 | 126.6 | 417.8 | 1301.4 | 3473.2 |
| 20C | 0.0 | 0.0 | 0.2 | 2.4 | 21.3 | 127.7 | 420.7 | 1311.8 | 3539.6 |
| 21C | 0.0 | 0.0 | 0.2 | 2.4 | 21.4 | 128.8 | 423.2 | 1327.2 | 3621.8 |
| 22C | 0.0 | 0.0 | 0.2 | 2.4 | 21.5 | 129.8 | 425.3 | 1334.5 | 3604.5 |
| 23C | 0.0 | 0.0 | 0.2 | 2.4 | 21.6 | 130.6 | 427.0 | 1336.7 | 3589.9 |
| 24C | 0.0 | 0.0 | 0.2 | 2.4 | 21.7 | 131.4 | 428.3 | 1341.7 | 3682.9 |
| 25C | 0.0 | 0.0 | 0.2 | 2.4 | 21.8 | 132.1 | 429.3 | 1351.1 | 3672.6 |
| 26C | 0.0 | 0.0 | 0.2 | 2.4 | 21.9 | 132.7 | 430.0 | 1348.8 | 3611.6 |
| 27C | 0.0 | 0.0 | 0.2 | 2.4 | 22.0 | 133.1 | 430.1 | 1349.0 | 3700.3 |
| 28C | 0.0 | 0.0 | 0.2 | 2.4 | 22.1 | 133.5 | 430.2 | 1352.1 | 3716.8 |
| 29C | 0.0 | 0.0 | 0.2 | 2.4 | 22.2 | 133.8 | 429.9 | 1354.6 | 3715.7 |
| 30C | 0.0 | 0.0 | 0.2 | 2.4 | 22.3 | 134.0 | 429.3 | 1350.7 | 3687.3 |
| 31C | 0.0 | 0.0 | 0.2 | 2.4 | 22.4 | 134.0 | 428.2 | 1348.2 | 3633.5 |
| 32C | 0.0 | 0.0 | 0.2 | 2.4 | 22.5 | 133.9 | 426.7 | 1344.2 | 3622.1 |
| 33C | 0.0 | 0.0 | 0.2 | 2.4 | 22.5 | 133.7 | 424.8 | 1343.1 | 3698.3 |
| 34C | 0.0 | 0.0 | 0.2 | 2.4 | 22.6 | 133.2 | 422.4 | 1338.5 | 3683.6 |
| 35C | 0.0 | 0.0 | 0.2 | 2.4 | 22.7 | 132.6 | 419.5 | 1330.0 | 3639.4 |
| 36C | 0.0 | 0.0 | 0.2 | 2.4 | 22.7 | 131.8 | 416.0 | 1315.3 | 3550.0 |
| 37C | 0.0 | 0.0 | 0.2 | 2.4 | 22.8 | 130.7 | 412.0 | 1304.5 | 3498.6 |
| 38C | 0.0 | 0.0 | 0.2 | 2.4 | 22.8 | 129.2 | 407.5 | 1292.3 | 3491.3 |
| 27C1 | 0.0 | 0.0 | 0.2 | 2.4 | 20.6 | 114.1 | 378.0 | 1181.7 | 3223.1 |
| 27C2 | 0.0 | 0.0 | 0.2 | 2.4 | 20.4 | 106.2 | 358.9 | 1114.8 | 3032.9 |

[Table 12]

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 2C1 | 0.0 | 0.0 | 0.2 | 2.4 | 21.7 | 128.9 | 428.4 | 1334.6 | 3613.2 |
| 2C2 | 0.0 | 0.0 | 0.2 | 2.4 | 21.8 | 128.8 | 427.9 | 1332.5 | 3628.6 |
| 2C3 | 0.0 | 0.0 | 0.2 | 2.4 | 21.6 | 125.5 | 417.4 | 1300.4 | 3529.1 |
| 18C1 | 0.0 | 0.0 | 0.2 | 2.4 | 22.0 | 136.1 | 447.0 | 1401.5 | 3775.9 |
| 18C2 | 0.0 | 0.0 | 0.2 | 2.4 | 22.2 | 136.7 | 448.3 | 1406.3 | 3791.2 |
| 18C3 | 0.0 | 0.0 | 0.2 | 2.4 | 22.0 | 133.6 | 438.6 | 1375.4 | 3697.5 |
| 21C1 | 0.0 | 0.0 | 0.2 | 2.4 | 22.4 | 141.0 | 458.1 | 1441.9 | 3956.2 |
| 21C2 | 0.0 | 0.0 | 0.2 | 2.4 | 22.5 | 142.3 | 461.4 | 1453.3 | 3985.8 |
| 21C3 | 0.0 | 0.0 | 0.2 | 2.4 | 22.4 | 139.8 | 453.8 | 1428.9 | 3910.1 |
| 24C1 | 0.0 | 0.0 | 0.2 | 2.4 | 22.6 | 143.0 | 460.4 | 1446.4 | 3967.8 |
| 24C2 | 0.0 | 0.0 | 0.2 | 2.4 | 22.8 | 144.9 | 465.1 | 1463.2 | 4021.8 |

(continued)

| No. | 1 Hz | 10 Hz | 100 Hz | 1 kHz | 10 kHz | 100 kHz | 1 MHz | 10 MHz | 100 MHz |
|---|---|---|---|---|---|---|---|---|---|
| 24C3 | 0.0 | 0.0 | 0.2 | 2.4 | 22.7 | 143.4 | 460.4 | 1448.3 | 3978.0 |
| 27C3 | 0.0 | 0.0 | 0.2 | 2.4 | 22.8 | 142.5 | 455.3 | 1430.8 | 3930.3 |
| 27C4 | 0.0 | 0.0 | 0.2 | 2.4 | 22.9 | 144.5 | 460.5 | 1447.9 | 3976.3 |
| 27C5 | 0.0 | 0.0 | 0.2 | 2.4 | 22.9 | 144.0 | 458.6 | 1442.4 | 3959.7 |
| 30C1 | 0.0 | 0.0 | 0.2 | 2.4 | 22.9 | 140.4 | 445.7 | 1404.6 | 3838.3 |
| 30C2 | 0.0 | 0.0 | 0.2 | 2.4 | 23.0 | 142.1 | 450.1 | 1419.4 | 3877.6 |
| 30C3 | 0.0 | 0.0 | 0.2 | 2.4 | 23.0 | 142.2 | 450.1 | 1419.9 | 3879.3 |

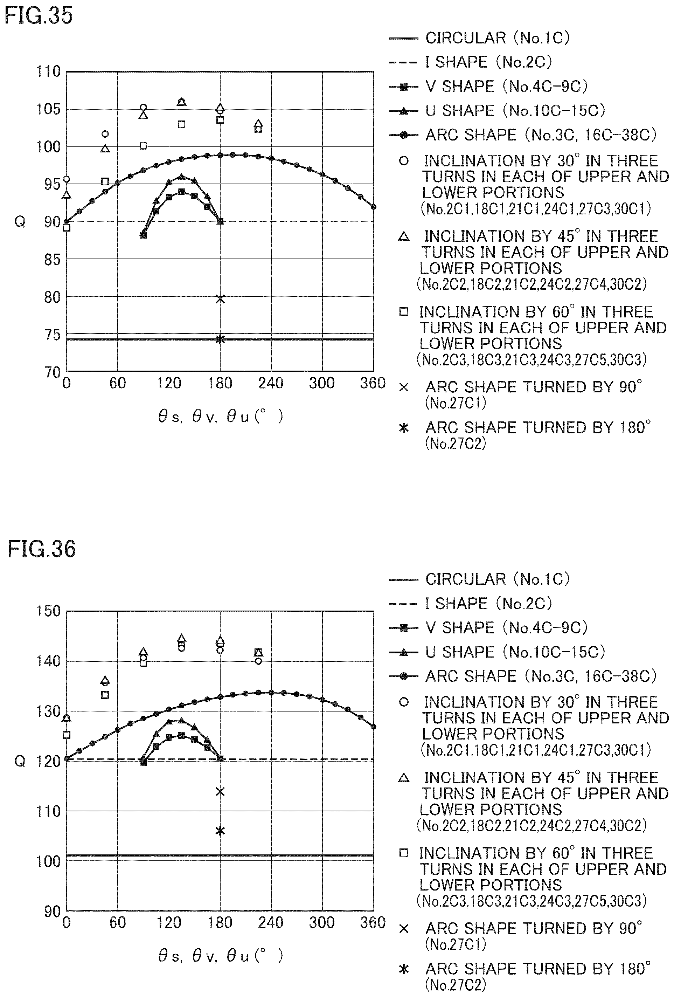

Fig. 35 shows a graph of the quality factor of each model in the third embodiment when coil diameter d is set to 50 mm and the frequency is set to 100 kHz. Fig. 36 shows a graph of the quality factor of each model in the third embodiment when coil diameter d is set to 100 mm and the frequency is set to 100 kHz. In Figs. 35 and 36, the abscissa represents central angle $\theta$s or angle $\theta$v or $\theta$u, and the ordinate represents the quality factor. In Figs. 35 and 36, a point at $\theta$s = 360° indicates a value obtained from the model corresponding to the coil in the thirteenth reference example. A point at $\theta$s = 0° and a point at $\theta$v or $\theta$u = 180° each indicate a value obtained from the model corresponding to the coil in the thirteenth reference example or the seventeenth reference example.

The models Nos. 4C to 38C corresponding to the coils in the eighth to tenth example are found to be larger in quality factor than the model No. 1C corresponding to the twelfth reference example where the conductor has the circular cross-sectional shape, as in the first embodiment.

Tendency that the models Nos. 16C to 38C each corresponding to the coil (in the arc shape) in the fourth example is larger in quality factor than the models Nos. 4C to 15C corresponding to the coils (in the V shape and the U shape) in the ninth example and the tenth example is observed.

The models Nos. 27C, 27C1, and 27C2 each correspond to the coil including the conductor in the arc shape having $\theta$s = 180°. The model No. 27C corresponding to the coil in the eighth example, however, is found to be larger in quality factor than the models Nos. 27C1 and 27C2 corresponding to the coils in the fifteenth and sixteenth reference examples.

It is found from the results of simulation of the model corresponding to the coil including the conductor in the arc shape that the quality factor is dependent on central angle $\theta$s. Specifically, in the example where coil diameter d is 50 mm, the quality factor becomes large when central angle $\theta$s is from 60° to 345°, the quality factor becomes larger when central angle $\theta$s is from 90° to 300°, and the quality factor becomes further larger when central angle $\theta$s is from 120° to 255°. In the example where coil diameter d is 100 mm, the quality factor becomes large when central angle $\theta$s is from 60° to 345°, the quality factor becomes larger when central angle $\theta$s is from 90° to 345°, the quality factor becomes further larger when central angle $\theta$s is from 120° to 330°, and the quality factor particularly becomes large when central angle $\theta$s is from 180° to 300°.

Furthermore, the quality factor is found to noticeably become large by inclination of reference straight lines 18a and 18b in first portion 1a and second portion 1b of electric wire 1 wound around first section 3a and second section 3b located on sides of opposing ends of target section 3 of central axis 2.

It is found from the results of simulation of the model corresponding to the coil including the conductor in the V shape that the quality factor is dependent on angle $\theta$v. The quality factor becomes large when angle $\theta$v is from 105° to 165° and becomes larger when angle $\theta$v is from 120° to 150°.

It is found from the results of simulation of the model corresponding to the coil including the conductor in the U shape that the quality factor is dependent on angle $\theta$u. The quality factor becomes large when angle $\theta$u is from 105° to 165° and becomes larger when angle $\theta$u is from 120° to 150°.

<Modification>

Though the arc shape, the V shape, and the U shape are shown as cross-sectional shapes 11 of conductor 10 in the description above, cross-sectional shape 11 is not limited as such. For example, cross-sectional shape 11 of conductor 10 may include three or more bent portions in such a manner that first end 12 and second end 13 are away from central axis 2. As there are a larger number of bent portions, the shape is closer to the arc shape and uneven distribution of the current is less likely. Therefore, there are preferably a larger number of bent portions. In that case, the outer side of the bent portion is preferably beveled.

<Application>

Coils 100A to 100C according to the first to third embodiments can each suitably be employed as a coil for magnetic coupling wireless power feed. Examples of the coil for magnetic coupling wireless power feed include a coil for charging a wearable device and a coil for charging a smartphone which are relatively compact, and a relatively large coil for charging a battery of an electric vehicle. In such a contactless power feed coil, an AC current at 85 kHz, 6.78 MHz, 13.56 MHz, or the like is normally fed, and coils 100A to 100C in the present embodiment can each suitably be employed in an application where an AC current not lower than 10 kHz or not lower than 100 kHz is fed.

Coils 100A to 100C according to the first to third embodiments can each suitably be employed as a resonance coil for electric field resonance coupling wireless power feed. Exemplary applications of electric field resonance coupling wireless power feed include an electric vehicle and an electric train. In such electric field resonance coupling wireless power feed, an AC current at 6.78 MHz, 13.56 MHz, 27.12 MHz, or the like is normally fed, and coils 100A to 100C in the present embodiment can each suitably be employed in an application where an AC current not lower than 10 kHz or not lower than 100 kHz is fed. The resonance coil for electric field resonance coupling wireless power feed refers to a coil to be inserted for improvement in power factor and production of a resonant state in an electric circuit including a power transmission coupler on a power transmission side or a power reception side in electric field resonance coupling wireless power feed.

Without being limited to the coil for magnetic coupling wireless power feed or the resonance coil for electric field resonance coupling wireless power feed, in an application at a high frequency where a resistance of a litz wire normally employed as an electric wire for the coil is high or an application for a compact device where use of the litz wire is difficult, coils 100A to 100C according to the first to third embodiments can each suitably be employed instead of the coil including the litz wire. The "high frequency" refers to a frequency preferably not lower than 1 MHz and more preferably not lower than 5 MHz.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

REFERENCE SIGNS LIST

1 electric wire; 1a first portion; 1b second portion; 1c third portion; 2 central axis; 3 target section; 3a first section; 3b second section; 3c third section; 10 conductor; 11, 11a to 11f cross-sectional shape; 12 first end; 13 second end; 14 first edge; 15 second edge; 16 central point; 17 line segment; 18, 18a to 18c reference straight line; 20 to 22 bent portion; 30 insulating material; 40a to 40c intersection; 100A to 100C coil.

**Claims**

1.   A coil comprising:

   an electric wire wound around a central axis once or helically a plurality of times, wherein
   the electric wire includes a conductor having an elongated cross-sectional shape in a plane including the central axis, and
   the cross-sectional shape is bent such that a first end and a second end in a longitudinal direction are away from the central axis.

2.   The coil according to claim 1, wherein
   with a straight line that passes through a central point of the cross-sectional shape and is orthogonal to a line segment that connects the first end and the second end to each other being defined as a reference straight line, the cross-sectional shape is in line symmetry with respect to the reference straight line.

3.   The coil according to claim 2, wherein
   the reference straight line is orthogonal to the central axis.

4.   The coil according to claim 1, wherein

   the electric wire is helically wound around a target section of the central axis at least three times,
   the electric wire includes

a first portion wound around a first section located on a side of one end in the target section,
a second portion wound around a second section located on a side of the other end in the target section, and
a third portion wound around a third section located between the first section and the second section in the target section, and

with a straight line that passes through a central point of the cross-sectional shape and is orthogonal to a line segment that connects the first end and the second end to each other being defined as a reference straight line,

the reference straight line in the third portion is orthogonal to the central axis,
the reference straight line in the first portion is inclined with respect to the reference straight line corresponding to the third portion, in a direction in which intersections with the central axis are away from each other, and
the reference straight line in the second portion is inclined with respect to the reference straight line corresponding to the third portion, in a direction in which intersections with the central axis are away from each other.

5. The coil according to any one of claims 1 to 4, wherein

the electric wire is helically wound at least two times, and
a distance between the central axis and the electric wire increases or decreases along the central axis.

6. The coil according to any one of claims 1 to 4, being a coil for magnetic coupling wireless power feed.

7. The coil according to any one of claims 1 to 4, being a resonance coil for electric field resonance coupling wireless power feed.

FIG.1

100A

d

FIG.2

100A

1

10,11a(11)

12

17

θs

18

16

O

14

15

R1

t

13

d/2

← INNER SIDE OF COIL

OUTER SIDE OF COIL →

# FIG.3

100A

10,11b(11)

12

14

L1

20

18

16

$\theta$v

15

17

t

13

d/2

INNER SIDE
OF COIL

OUTER SIDE
OF COIL

1

2

# FIG.4

100A

21

12

10,11c(11)

L2

$\theta$u

18

16

L3

14

17

22

t

15

13

d/2

INNER SIDE
OF COIL

OUTER SIDE
OF COIL

1

2

FIG.5

(a)

(b)

FIG.6

(a)

(b)

**FIG.7**

**FIG.8**

## FIG.9

O
t
10,11f
R2

d/2

← INNER SIDE OF COIL

OUTER SIDE OF COIL →

## FIG.10

2

18
12  14  17  13
15  16
10,11a

d/2

← INNER SIDE OF COIL

OUTER SIDE OF COIL →

FIG.11

d/2

INNER SIDE
OF COIL

OUTER SIDE
OF COIL

FIG.12

| | | | | | | | |
|---|---|---|---|---|---|---|---|
| No.1A | No.2A | No.3A | No.4A | No.5A | No.6A | No.7A | No.8A |
| No.9A | No.10A | No.11A | No.12A | No.13A | No.14A | No.15A | No.16A |
| No.17A | No.18A | No.19A | No.20A | No.21A | No.22A | No.23A | No.24A |
| No.25A | No.26A | No.27A | No.28A | No.29A | No.30A | No.31A | No.32A |
| No.33A | No.34A | No.35A | No.36A | No.37A | No.38A | No.27A1 | No.27A2 |

FIG.13

FIG.14

FIG.15

FIG.16

FIG.17

INNER SIDE
OF COIL

OUTER SIDE
OF COIL

100B

FIG.18

18

12
17
16
13

10,11c(11)

P1

100B

14
15

INNER SIDE
OF COIL

OUTER SIDE
OF COIL

2

d/2

FIG.19

FIG.20

10,11d

2

P1

INNER SIDE
OF COIL

OUTER SIDE
OF COIL

d/2

FIG.21

INNER SIDE
OF COIL

OUTER SIDE
OF COIL

FIG.22

INNER SIDE
OF COIL

OUTER SIDE
OF COIL

10,11f

P1

d/2

2

FIG.23

EP 4 564 381 A1

FIG.24

18

14 — 15

10,11a

P1

2

← INNER SIDE
OF COIL

OUTER SIDE →
OF COIL

d/2

FIG.25

FIG.26

FIG.27

EP 4 564 381 A1

FIG.28

| No.31B | No.32B | No.33B | No.34B | No.35B | No.36B | No.37B | No.38B | No.27B1 | No.27B2 |

EP 4 564 381 A1

FIG.29

| No.2B1 | No.2B2 | No.2B3 | No.18B1 | No.18B2 | No.18B3 | No.21B1 | No.21B2 | No.21B3 |

FIG.30

| No.24B1 | No.24B2 | No.24B3 | No.27B3 | No.27B4 | No.27B5 | No.30B1 | No.30B2 | No.30B3 |

FIG.31

CIRCULAR (No.1B)

--- I SHAPE (No.2B)

■ V SHAPE (No.4B–9B)

▲ U SHAPE (No.10B–15B)

● ARC SHAPE (No.3B, 16B–38B)

○ INCLINATION BY 30° IN THREE TURNS IN EACH OF UPPER AND LOWER PORTIONS (No.2B1,18B1,21B1,24B1,27B3,30B1)

△ INCLINATION BY 45° IN THREE TURNS IN EACH OF UPPER AND LOWER PORTIONS (No.2B2,18B2,21B2,24B2,27B4,30B2)

□ INCLINATION BY 60° IN THREE TURNS IN EACH OF UPPER AND LOWER PORTIONS (No.2B3,18B3,21B3,24B3,27B5,30B3)

× ARC SHAPE TURNED BY 90° (No.27B1)

✳ ARC SHAPE TURNED BY 180° (No.27B2)

FIG.32

CIRCULAR (No.1B)

--- I SHAPE (No.2B)

■ V SHAPE (No.4B–9B)

▲ U SHAPE (No.10B–15B)

● ARC SHAPE (No.3B, 16B–38B)

○ INCLINATION BY 30° IN THREE TURNS IN EACH OF UPPER AND LOWER PORTIONS (No.2B1,18B1,21B1,24B1,27B3,30B1)

△ INCLINATION BY 45° IN THREE TURNS IN EACH OF UPPER AND LOWER PORTIONS (No.2B2,18B2,21B2,24B2,27B4,30B2)

□ INCLINATION BY 60° IN THREE TURNS IN EACH OF UPPER AND LOWER PORTIONS (No.2B3,18B3,21B3,24B3,27B5,30B3)

× ARC SHAPE TURNED BY 90° (No.27B1)

✳ ARC SHAPE TURNED BY 180° (No.27B2)

FIG.33

FIG.34

10,11a(11)

P1

P2

INNER SIDE
OF COIL

OUTER SIDE
OF COIL

100C

d/2

FIG.35

—— CIRCULAR (No.1C)

--- I SHAPE (No.2C)

—■— V SHAPE (No.4C-9C)

—▲— U SHAPE (No.10C-15C)

—●— ARC SHAPE (No.3C, 16C-38C)

○ INCLINATION BY 30° IN THREE TURNS IN EACH OF UPPER AND LOWER PORTIONS (No.2C1,18C1,21C1,24C1,27C3,30C1)

△ INCLINATION BY 45° IN THREE TURNS IN EACH OF UPPER AND LOWER PORTIONS (No.2C2,18C2,21C2,24C2,27C4,30C2)

□ INCLINATION BY 60° IN THREE TURNS IN EACH OF UPPER AND LOWER PORTIONS (No.2C3,18C3,21C3,24C3,27C5,30C3)

× ARC SHAPE TURNED BY 90° (No.27C1)

✳ ARC SHAPE TURNED BY 180° (No.27C2)

FIG.36

—— CIRCULAR (No.1C)

--- I SHAPE (No.2C)

—■— V SHAPE (No.4C-9C)

—▲— U SHAPE (No.10C-15C)

—●— ARC SHAPE (No.3C, 16C-38C)

○ INCLINATION BY 30° IN THREE TURNS IN EACH OF UPPER AND LOWER PORTIONS (No.2C1,18C1,21C1,24C1,27C3,30C1)

△ INCLINATION BY 45° IN THREE TURNS IN EACH OF UPPER AND LOWER PORTIONS (No.2C2,18C2,21C2,24C2,27C4,30C2)

□ INCLINATION BY 60° IN THREE TURNS IN EACH OF UPPER AND LOWER PORTIONS (No.2C3,18C3,21C3,24C3,27C5,30C3)

× ARC SHAPE TURNED BY 90° (No.27C1)

✳ ARC SHAPE TURNED BY 180° (No.27C2)

## INTERNATIONAL SEARCH REPORT

| International application No. |
| --- |
| **PCT/JP2022/044550** |

**A.    CLASSIFICATION OF SUBJECT MATTER**

*H01F 5/00*(2006.01)i; *H01F 38/14*(2006.01)i
FI:    H01F5/00 F; H01F38/14

According to International Patent Classification (IPC) or to both national classification and IPC

**B.    FIELDS SEARCHED**

Minimum documentation searched (classification system followed by classification symbols)

H01F5/00; H01F38/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 11-297523 A (TOYOTA MOTOR CORPORATION) 29 October 1999 (1999-10-29) paragraphs [0005]-[0007], fig. 1, 2 | 1, 2, 5-7 |
| A | | 4 |
| Y | JP 2021-100102 A (TATSUTA ELECTRIC WIRE & CABLE COMPANY, LIMITED) 01 July 2021 (2021-07-01) paragraphs [0020]-[0027], fig. 1, 2 | 1-3, 5-7 |
| A | | 4 |
| Y | JP 2004-327523 A (MATSUSHITA ELECTRIC IND. COMPANY, LIMITED) 18 November 2004 (2004-11-18) paragraph [0027], fig. 10-12 | 1-3, 5-7 |
| A | | 4 |
| Y | JP 2014-175865 A (NUCURRENT INCORPORATED) 22 September 2014 (2014-09-22) paragraphs [0064], [0067], fig. 5A-5G | 1-3, 5-7 |
| A | | 4 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 January 2023** | **24 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2022/044550** |

| C. | DOCUMENTS CONSIDERED TO BE RELEVANT | |
|---|---|---|
| Category* | Citation of document, with indication, where appropriate, of the relevant passages | Relevant to claim No. |
| A | JP 10-256491 A (NEC CORPORATION) 25 September 1998 (1998-09-25) | 1-7 |
| A | JP 2020-178034 A (SHINSHU UNIVERSITY) 29 October 2020 (2020-10-29) | 1-7 |
| A | JP 2021-163948 A (MURATA MFG. COMPANY, LIMITED) 11 October 2021 (2021-10-11) | 1-7 |
| A | JP 5-41321 A (NIPPON TELEGR. & TELEPH. CORPORATION) 19 February 1993 (1993-02-19) | 1-7 |
| A | US 2015/0130583 A1 (EATON CORPORATION) 14 May 2015 (2015-05-14) | 1-7 |
| A | WO 2010/038297 A1 (TOYOTA MOTOR CORPORATION) 08 April 2010 (2010-04-08) | 1-7 |

Form PCT/ISA/210 (second sheet) (January 2015)

## INTERNATIONAL SEARCH REPORT
### Information on patent family members

International application No.

**PCT/JP2022/044550**

| Patent document cited in search report | | | Publication date (day/month/year) | Patent family member(s) | | | Publication date (day/month/year) |
|---|---|---|---|---|---|---|---|
| JP | 11-297523 | A | 29 October 1999 | (Family: none) | | | |
| JP | 2021-100102 | A | 01 July 2021 | (Family: none) | | | |
| JP | 2004-327523 | A | 18 November 2004 | (Family: none) | | | |
| JP | 2014-175865 | A | 22 September 2014 | (Family: none) | | | |
| JP | 10-256491 | A | 25 September 1998 | US | 6400027 | B1 | |
| | | | | CN | 1197293 | A | |
| JP | 2020-178034 | A | 29 October 2020 | (Family: none) | | | |
| JP | 2021-163948 | A | 11 October 2021 | (Family: none) | | | |
| JP | 5-41321 | A | 19 February 1993 | (Family: none) | | | |
| US | 2015/0130583 | A1 | 14 May 2015 | WO | 2015/070151 | A1 | |
| | | | | CN | 105706195 | A | |
| WO | 2010/038297 | A1 | 08 April 2010 | US | 2011/0049978 | A1 | |
| | | | | EP | 2333796 | A1 | |
| | | | | CN | 102171777 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021100102 A